# EUROPEAN PATENT SPECIFICATION

(11) **EP 3 978 347 B1**
(45) Date of publication and mention of the grant of the patent: **07.06.2023**
(21) Application number: 20835580.0
(22) Date of filing: 29.06.2020
(51) Int. Cl.: B62M 25/08, F16H 61/00, F16H 61/662, F16H 9/12, B60K 6/22, B60K 6/40, B60K 6/485, B60K 6/543, B62J 99/00, F02D 45/00, B62J 43/30, B62J 45/20, B62M 7/04, B62M 9/06

(54) **STRADDLED VEHICLE**
GRÄTSCHSITZFAHRZEUG
VÉHICULE À SELLE

(30) Priority: 02.07.2019 JP 2019123360
(43) Date of publication of application: 06.04.2022
(73) Proprietor: Yamaha Hatsudoki Kabushiki Kaisha, Iwata-shi, Shizuoka 438-8501 (JP)
(72) Inventor: SEKIGUCHI, Naoki, Iwata-shi, Shizuoka 438-8501 (JP); MURAYAMA, Takuji, Iwata-shi, Shizuoka 438-8501 (JP); WATANABE, Hiroto, Iwata-shi, Shizuoka 438-8501 (JP)
(74) Representative: Zimmermann, Tankred Klaus
(86) International application number: PCT/JP2020/025441
(87) International publication number: WO 2021/002308

(56) References cited:
- WO-A1-2017/169522
- JP-A- S5 820 578
- JP-A- S6 166 436
- JP-A- 2007 076 550
- JP-A- 2010 083 310
- US-A1- 2007 075 845

## Description

### [Technical Field]

The present teaching relates to a straddled vehicle on which controllers connected by a multiplex communication line through which multiplexed data communication is performed and an engine unit are mounted.

### [Background Art]

There is a known straddled vehicle on which controllers connected by a multiplex communication line through which multiplexed data communication is performed are mounted. Patent Literature 1 discloses a straddled vehicle including a multiplex communication line through which multiplexed data communication is performed between controllers.

According to Patent Literature 1, an influence of noise on the multiplex communication line is suppressed because the multiplex communication line is provided at a location remote from devices such as a battery device and a regulator that are sources of noise.

### [Citation List]

### [Patent Literatures]

[Patent Literature 1] Japanese Unexamined Patent Publication No. 2007-76550

### [Summary]

### [Technical Problem]

Patent Literature 1 discloses all of the features of the preamble of claim 1.

According to Patent Literature 1, an influence of noise on the multiplex communication line is suppressed because the multiplex communication line is provided at a location remote from devices such as a battery device and a regulator that are sources of noise. However, the straddled vehicle is unavoidably upsized because the vehicle has a narrow vehicle width.

In addition to this, such a straddled vehicle includes an engine unit. On this account, on the straddled vehicle, it is necessary to mount an engine motor configured to apply driving force to an engine or a transmission control motor configured to change the transmission ratio of a transmission such as a continuously variable transmission device or a stepped transmission device.

On the straddled vehicle, furthermore, it is necessary to mount controllers connected by a multiplex communication line, such as a controller configured to control the transmission control motor and a controller configured to control the engine motor.

On this account, when controllers connected by a multiplex communication line by which multiplexed data communication is performed and an engine unit are mounted on a known straddled vehicle, it is difficult to suppress the upsizing of the straddled vehicle while suppressing an influence of noise on the multiplex communication line.

The present teaching relates to a straddled vehicle on which controllers connected by a multiplex communication line through which multiplexed data communication is performed and an engine unit are mounted, and an object of the present teaching is to suppress upsizing of the straddled vehicle while suppressing an influence of noise on the multiplex communication line.

### [Solution to Problem]

Inventors of the subject application studied an influence of noise on a multiplex communication line in a straddled vehicle on which controllers connected by the multiplex communication line were mounted. The inventors of the subject application further studied, as the controllers connected by the multiplex communication line, a first controller connected to a device that was neither a transmission control motor nor an engine motor and a second controller connected to at least one of the transmission control motor or the engine motor. It was found that a current running through a power line connecting a drive circuit in the second controller with at least one of the transmission control motor or the engine motor was larger than a current flowing in a power line connecting a drive circuit in the first controller with a device that was neither the transmission control motor nor the engine motor. The inventors of the subject application found that, the longer the power line connecting the drive circuit in the second controller with at least one of the transmission control motor or the engine motor was, the more noise was likely to occur in the multiplex communication line.

In order to suppress an influence of the noise on the multiplex communication line, the inventors of the subject application found a technical idea that was different from the technical idea of Patent Literature 1 by which the multiplex communication line was provided to be remote from a source of noise. The technical idea found by the inventors of the subject application is to suppress the generation of noise itself in order to suppress the influence of the noise on the multiplex communication line. In order to suppress the generation of the noise, the inventors of the subject application realized that the power line connecting the second drive circuit included in the second controller with at least one of the transmission control motor or the engine motor should be shortened.

To be more specific, the inventors of the subject application realized that the power line connecting the second drive circuit included in the second controller with at least one of the transmission control motor or the engine motor should be arranged to be shorter than a multiplex communication line provided between communication devices that are included in the controllers and capable of performing multiplexed data communication.

A battery device is connected to the drive circuit included in the second controller connected to at least one of the transmission control motor or the engine motor. Because the battery device is relatively large, the degree of freedom in the layout of the battery device is low. In other words, on account of the limitation on the layout of the battery device, the length of the power line connecting the battery device to the drive circuit may not be changeable. The inventors of the subject application realized that the power line connecting the second drive circuit included in the second controller to at least one of the transmission control motor or the engine motor should be arranged to be shorter than the power line connecting the second drive circuit included in the second controller to the battery device.

Meanwhile, in a straddled vehicle on which controllers connected by a multiplex communication line and an engine unit are mounted, it is required to suppress upsizing of the straddled vehicle while suppressing an influence of noise on the multiplex communication line. The inventors of the subject application found that the demand was met by elongating the multiplex communication line connecting a first communication device included in the first controller and capable of performing multiplexed data communication with a second controller included in the second controller and capable of performing multiplexed data communication, in order not to restrict the layout of the first controller. To put it differently, the inventors realized that the power line connecting the second drive circuit of the second controller with at least one of the transmission control motor or the engine motor should be arranged to be shorter than the multiplex communication line between the communication devices included in the controllers and capable of performing multiplexed data communication, and arranged the power line connecting the second drive circuit included in the second controller to at least one of the transmission control motor or the engine motor to be shorter than the power line connecting the second drive circuit included in the second controller to the battery device.

The inventors of the subject application found that, with the arrangement above, while an influence of noise on the multiplex communication line was suppressed by suppression of the generation of the noise itself, the upsizing of the straddled vehicle was suppressed by increasing the degree of freedom in the layout of the first controller.
(1) A straddled vehicle of the present teaching includes: a front wheel unit which includes at least one front wheel; a rear wheel unit which includes at least one rear wheel and is provided rearward of the front wheel unit in a vehicle front-rear direction; a vehicle body frame; an engine unit which includes an engine including a crankshaft and is supported by the vehicle body frame; a battery device which is supported by the vehicle body frame; at least one first controller which includes a first communication device and a first drive circuit, the first communication device being connected to a multiplex communication line performing multiplexed data communication so as to be capable of performing the multiplexed data communication; and at least one second controller which includes a second communication device and a second drive circuit, the second communication device being connected to the multiplex communication line so as to be capable of performing the multiplexed data communication and capable of performing the multiplexed data communication with the first communication device of the at least one first controller, wherein the first drive circuit is connected to the battery device by a first power line for receiving electric power from the battery device, wherein the second drive circuit is connected to the battery device by a second power line and receiving electric power from the battery device, wherein the engine unit includes at least one of (a) at least one engine motor which is configured to apply a torque to a target shaft provided on a power transmission path through which power is transmitted from the crankshaft to a driving wheel of at least one of the front wheel unit or the rear wheel unit, or (b) a transmission provided in at least part of the power transmission path and a transmission control motor configured to change the transmission ratio of the transmission, wherein in the at least one second controller, the second drive circuit is connected by a third power line to at least one of the transmission control motor or the at least on engine motor, the second drive circuit configured to generate a drive signal by which the transmission control motor or the at least one engine motor is driven, wherein the at least one second controller is provided at a location where a length (Lm) of the third power line between the second drive circuit and the transmission control motor connected to the second drive circuit or a length (Lg) of the third power line between the second drive circuit and the at least one engine motor connected to the second drive circuit is shorter than a length (Lb) of the second power line between the second drive circuit and the battery device, and wherein a length (Lc) of the multiplex communication line between the first communication device and the second communication device is longer than the length (Lm) of the third power line between the second drive circuit and the transmission control motor connected to the second drive circuit or the length (Lg) of the third power line between the second drive circuit and the at least one engine motor connected to the second drive circuit.

According to this arrangement, the battery device supplies electric power to at least one of the transmission control motor or the at least one engine motor connected to the second drive circuit, through the second drive circuit. In this regard, a relatively large current flows in a power line (third power line) between the second drive circuit and at least one of the transmission control motor or the at least one engine motor connected to the second drive circuit. The longer the power line between the second drive circuit and at least one of the transmission control motor or the at least one engine motor connected to the second drive circuit is, the more likely noise is generated in the multiplex communication line. In other words, when the length of the power line between the second drive circuit and at least one of the transmission control motor or the at least one engine motor connected to the second drive circuit is longer than the length of the multiplex communication line between the first communication device and the second communication device, noise tends to be generated in the multiplex communication line connecting the first communication device to the second communication device. Because the battery device is relatively large, the degree of freedom in the layout of the battery device is low. In other words, on account of the limitation on the layout of the battery device, the length of the power line (second power line) connecting the battery device to the second drive circuit may not be changeable. On this account, when the power line between the second drive circuit and at least one of the transmission control motor or the at least one engine motor connected to the second drive circuit is longer than the power line between the second drive circuit and the battery device, noise tends to be generated in the multiplex communication line.

The at least one second controller is provided so that the power line between the second drive circuit and at least one of the transmission control motor or the at least one engine motor connected to the second drive circuit is shorter than the power line between the second drive circuit and the battery device. This arrangement makes it possible to suppress the generation of noise itself as compared to a case where the power line connecting the second drive circuit to at least one of the transmission control motor or the at least one engine motor connected to the second drive circuit is longer than the power line between the second drive circuit and the battery device. On this account, it is possible to suppress an influence of noise on the multiplex communication line connecting the first communication device to the second communication device, without providing the multiplex communication line at a location remote from the battery device and at least one of the transmission control motor or the at least one engine motor connected to the second drive circuit.

The at least one second controller is provided so that the power line between the second drive circuit and at least one of the transmission control motor or the at least one engine motor connected to the second drive circuit is shorter than the multiplex communication line between the first communication device and the second communication device. The at least one first controller may be provided so that the multiplex communication line between the first communication device and the second communication device is longer than the power line between the second drive circuit and at least one of the transmission control motor or the at least one engine motor connected to the second drive circuit. It is therefore possible to elongate the multiplex communication line between the first communication device and the second communication device, with the result that the at least one first controller including the first communication device can be provided at a location remote from the at least one second controller. On this account, it is possible to elongate the multiplex communication line between the first communication device and the second communication device. Accordingly, the degree of freedom in the layout of the at least one first controller including the first communication device is improved. As a result, the upsizing of the straddled vehicle is suppressed.

In this way, in regard to the straddled vehicle on which the plurality of controllers connected by the multiplex communication line through which multiplexed data communication is performed are mounted, it is possible to suppress upsizing of the straddled vehicle while suppressing an influence of noise on the multiplex communication line.

(2) According to another aspect of the present teaching, the straddled vehicle of the present teaching preferably includes the following arrangement, in addition to the arrangement (1).

The at least one second controller is provided at a location where the multiplex communication line between the first communication device and the second communication device is longer than the second power line between the second drive circuit and the battery device.

According to this arrangement, the length of the multiplex communication line between the first communication device and the second communication device is longer than the length of the power line between the second drive circuit and the battery device. This arrangement makes it possible to suppress the generation of noise itself as compared to a case where the power line connecting the second drive circuit and the battery device is longer than the multiplex communication line between the first communication device and the second communication device. On this account, it is possible to suppress an influence of noise on the multiplex communication line connecting the first communication device to the second communication device, without providing the multiplex communication line at a location remote from the battery device and at least one of the transmission control motor or the at least one engine motor.

(3) According to another aspect of the present teaching, the straddled vehicle of the present teaching preferably includes the following arrangement, in addition to the arrangement (1) or (2).

The engine unit includes the transmission, the transmission includes: a primary sheave which is provided on a primary shaft member to which power of the crankshaft is transmitted; a secondary sheave which is provided on a secondary shaft member having a rotational axis extending in parallel to a rotational axis of the primary shaft member; and a belt which is wound on the primary sheave and the secondary sheave to transmit, to the secondary sheave, power transmitted from the crankshaft to the primary sheave, and each of the at least one second controller is provided so as not to at least partially overlap the primary shaft member and the secondary shaft member when viewed in the direction of the rotational axis of the primary shaft member.

According to this arrangement, the at least one second controller is provided at a location where each second controller does not at least partially overlap the primary shaft member and the secondary shaft member when viewed in the rotational axis direction of the primary shaft member. When viewed in the rotational axis direction of the primary shaft member, there is a relatively large space at a location that does not overlap the primary shaft member and the secondary shaft member. A space where at least one second controller is provided is easily secured in this way. Because the degree of freedom in the layout of the at least one second controller is high, it is possible to provide the at least one second controller while suppressing the upsizing of the straddled vehicle.

(4) According to another aspect of the present teaching, the straddled vehicle of the present teaching preferably includes the following arrangement, in addition to any one of the arrangements (1) to (3). The straddled vehicle further includes an engine unit case which accommodates at least part of at least one of the engine or the transmission, the at least one second controller being supported by the engine unit case.

According to this arrangement, the at least one second controller, which includes the second drive circuit connected to the battery device and at least one of the transmission control motor or the at least one engine motor, is supported by the engine unit case which at least partially accommodates at least one of the engine or the transmission. The at least one second controller may be directly supported by the engine unit case, or may be indirectly supported by the engine unit case through the intermediary of another member. In other words, the at least one second controller is provided at a location relatively close to at least one of the battery device, the transmission control motor, or the at least one engine motor. This arrangement makes it possible to suppress the generation of noise as compared to a case where the at least one second controller is provided at a location relatively remote from at least one of the battery device, the transmission control motor, or the at least one engine motor.

The at least one second controller is provided at the engine unit case. The engine unit case has a relatively large surface in order to accommodate at least part of at least one of the engine or the transmission. On this account, in the engine unit case, a space where the at least one second controller is provided is easily secured. For example, the at least one second controller may be supported by a wall surface inside the engine unit case. Alternatively, for example, the at least one second controller may be supported by the engine unit case such that the controller is provided in an isolation chamber provided inside the engine unit case. For example, the at least one second controller may be supported by a wall surface outside the engine unit case. Alternatively, for example, the at least one second controller may be supported by the engine unit case such that the controller is provided in a recess formed in the outer wall surface of the engine unit case. In this case, the engine unit case may have a cover to cover the at least one second controller provided in the recess of the engine unit case. As such, because the degree of freedom in the layout of the at least one second controller is high in the engine unit case, it is possible to provide the at least one second controller while suppressing the upsizing of the straddled vehicle.

(5) According to another aspect of the present teaching, the straddled vehicle of the present teaching preferably includes the following arrangement, in addition to any one of the arrangements (1) to (4). The first drive circuit is connected, by a communication line, to at least one of a display which is configured to display a running state of the straddled vehicle, a fuel injector which is configured to inject and supply fuel to the engine, or an ignition device which is configured to ignite the fuel supplied to the engine, the first drive circuit is configured to generate a drive signal by which at least one of the display, the fuel injector, or the ignition device is driven, and the battery device is connected by a forth power line to at least one of the display, the fuel injector, or the ignition device connected to the first drive circuit, so as to supply electric power to the at least one of the display, the fuel injector, or the ignition device.

According to this arrangement, the at least one first controller includes the first drive circuit that is connected to the display, the fuel injector, or the ignition device by the communication line. The battery device is connected to at least one of the display, the fuel injector, or the ignition device connected to the first drive circuit by the power line (forth power line), and supplies electric power thereto. In this regard, a current flowing in the power line between the battery device and at least one of the display, the fuel injector, or the ignition device connected to the first drive circuit is smaller than a current flowing in the power line between the second drive circuit and at least one of the transmission control motor or the at least one engine motor connected to the second drive circuit. On this account, even if the power line between the battery device and at least one of the display, the fuel injector, or the ignition device connected to the first drive circuit is elongated, an influence of noise on the multiplex communication line connecting the first communication device to the second communication device is suppressed when the power line between the second drive circuit and at least one of the transmission control motor or the engine motor connected to the second drive circuit is short as described above. On this account, even if the power line between the battery device and at least one of the display, the fuel injector, or the ignition device connected to the first drive circuit is elongated, an influence of noise on the multiplex communication line connecting the first communication device to the second communication device is suppressed by suppressing the generation of noise, when the power line between the second drive circuit and the transmission control motor or at least one of the at least one engine motor connected to the second drive circuit is short as described above. Furthermore, it is possible to elongate the length of the power line between the battery device and at least one of the display, the fuel injector, or the ignition device connected to the first drive circuit. Accordingly, the degree of freedom in the layout of the at least one first controller is improved. As a result, the upsizing of the straddled vehicle is suppressed.

(6) According to another aspect of the present teaching, the straddled vehicle of the present teaching preferably includes the following arrangement, in addition to any one of the arrangements (1) to (5). The at least one engine motor connected to the second drive circuit is at least one of: a rotating electric machine which is configured to apply, to the target shaft, a torque in a direction identical with or opposite to a rotational direction of the crankshaft; an electric motor which is configured to apply, to the target shaft, a torque in the direction identical with the rotational direction of the crankshaft; or a generator which is configured to apply, to the target shaft, a torque in the direction opposite to the rotational direction of the crankshaft.

According to this arrangement, the at least one engine motor is at least one of a rotating electric machine, an electric motor, or a generator. The rotating electric machine is configured to apply, to the target shaft, torque which is identical in direction with or opposite in direction to the rotational direction of the crankshaft. The application of torque which is identical in direction with or opposite in direction to the rotational direction of the crankshaft to the target shaft indicates absorption of the torque in the same direction as the rotational direction from the target shaft. In this connection, a relatively large current flows through the power line between the rotating electric machine and the second drive circuit. The at least one second controller is provided so that the power line between the second drive circuit and the rotating electric machine is shorter than the multiplex communication line between the first communication device and the second communication device. Furthermore, the at least one second controller is provided so that the power line between the second drive circuit and the rotating electric machine is shorter than the power line between the second drive circuit and the battery device. The electric motor is configured to apply, to the target shaft, torque which is identical in direction with the rotational direction of the crankshaft. A relatively large current flows through the power line between the electric motor and the second drive circuit. In this connection, the at least one second controller is provided so that the power line between the second drive circuit and the electric motor is shorter than the multiplex communication line between the first communication device and the second communication device. Furthermore, the at least one second controller is provided so that the power line between the second drive circuit and the electric motor is shorter than the power line between the second drive circuit and the battery device. The generator is configured to apply, to the target shaft, torque which is opposite in direction to the rotational direction of the crankshaft. A relatively large current flows through the power line between the generator and the second drive circuit. In this connection, the at least one second controller is provided so that the power line between the second drive circuit and the generator is shorter than the multiplex communication line between the first communication device and the second communication device. Furthermore, the at least one second controller is provided so that the power line between the second drive circuit and the generator is shorter than the power line between the second drive circuit and the battery device. On this account, it is possible to suppress an influence of noise on the multiplex communication line by suppressing the generation of noise itself, without providing the multiplex communication line at a location remote from at least one of the rotating electric machine, the electric motor, or the generator and the battery device.

(7) According to another aspect of the present teaching, the straddled vehicle of the present teaching preferably includes the following arrangement, in addition to any one of the arrangements (1) to (6). The engine unit includes the transmission and the transmission control motor, and the transmission control motor is connected to the second drive circuit by the third power line.

According to this arrangement, a relatively large current flows through a power line between the second drive circuit and the transmission control motor connected to the second drive circuit. The longer the power line between the second drive circuit and the transmission control motor connected to the second drive circuit is, the more likely noise is generated in a multiplex communication line. In other words, when the length of the power line between the second drive circuit and the transmission control motor connected to the second drive circuit is longer than the length of the multiplex communication line between the first communication device and the second communication device, noise tends to be generated in the multiplex communication line connecting the first communication device to the second communication device. Furthermore, when the length of the power line between the second drive circuit and the transmission control motor connected to the second drive circuit is longer than the length of a power line between the second drive circuit and a battery device, noise tends to be generated in the multiplex communication line connecting the first communication device to the second communication device. In this connection, the at least one second controller is provided so that the power line between the second drive circuit and the transmission control motor connected to the second drive circuit is shorter than the multiplex communication line between the first communication device and the second communication device. Furthermore, the at least one second controller is provided so that the length of the power line between the second drive circuit and the transmission control motor connected to the second drive circuit is shorter than the length of the power line between the second drive circuit and the battery device. With these arrangements, the generation of noise is suppressed and an influence of noise on the multiplex communication line connecting the first communication device to the second communication device is suppressed.

(8) According to another aspect of the present teaching, the straddled vehicle of the present teaching preferably includes the following arrangement, in addition to any one of the arrangements (1) to (7). The at least one first controller includes a plurality of the first controllers, the at least one second controller includes a plurality of the second controllers, or the at least one first controller includes a plurality of the first controllers and the at least one second controller includes a plurality of the second controllers.

According to this arrangement, at least one of the transmission control motor or the at least one engine motor is connected to the second drive circuit of the at least one second controller. In this regard, a relatively large current flows in a power line between the second drive circuit and at least one of the transmission control motor or the at least one engine motor connected to the second drive circuit. The longer this power line is, the more likely noise is generated in the multiplex communication line. As described above, the at least one second controller is provided at a location where the power line between the second drive circuit and at least one of the transmission control motor or the at least one engine motor connected to the second drive circuit is shorter than the multiplex communication line between the first communication device and the second communication device. The at least one second controller is provided at a location where the power line between the second drive circuit and at least one of the transmission control motor or the at least one engine motor connected to the second drive circuit is shorter than the power line between the second drive circuit and the battery device. On this account, even if more than one second controllers are provided, an influence of noise on the multiplex communication line connecting the first communication device to the second communication device is suppressed by suppressing the generation of the noise. Furthermore, the length of the multiplex communication line between the at least one first controller and the at least one second controller can be set at will. On this account, even if there are more than one first controllers, the degree of freedom in the layout of the first controllers is improved. As a result, even if more than one controllers connected by the multiplex communication line are mounted on the straddled vehicle, upsizing of the straddled vehicle is suppressed.

### <Definition of Straddled Vehicle>

A straddled vehicle in the present teaching and embodiments indicates all types of vehicles on which a rider rides in a manner of straddling a saddle. The straddled vehicle encompasses motorcycles, motor tricycles, four-wheeled buggies (ATVs: All Terrain Vehicles), and the like.

### <Definition of Engine>

An engine in the present teaching and the embodiments is a power source for driving a driving wheel of a straddled vehicle. The engine is, for example, an engine-vehicle-mounted engine which includes a crankshaft and causes a straddled vehicle to run by rotating the crankshaft and driving the driving wheel. The engine may be a single-cylinder engine having one cylinder or a multi-cylinder engine having plural cylinders. The engine may be a four-stroke engine or a two-stroke engine. The engine may be a water-cooled engine, a liquid-cooled engine utilizing a coolant other than water, or an oilcooled engine which uses a large amount of lubricating oil for cooling as compared to typical engines. In addition to the above, the engine may be a forced air-cooled engine or a natural air-cooled engine. The engine may be a gasoline engine, a diesel engine, or a hydrogen rotary engine. The diesel engine is an engine in which output is controlled solely by a fuel injection amount. The engine is, for example, an electric-vehicle-mounted engine with which a generator is driven by the engine to generate electric power and the vehicle runs as a wheel is rotated by an electric motor driven by the generated electric power. The engine is, for example, a hybrid-vehicle-mounted engine with which a state of driving a driving wheel by rotating a crankshaft by the engine and a state of driving the driving wheel by an electric motor are switchable.

### <Definition of Engine Unit>

An engine unit in the present teaching and the embodiments may include a transmission. The engine unit may include a supercharger. The supercharger compresses air supplied to a combustion chamber of the engine. The supercharger may be a mechanical supercharger or an exhaust gas turbine supercharger (i.e., so-called turbocharger).

### <Definition of Multiplex Communication Line>

A multiplex communication line of the present teaching and the embodiments is a communication line through which multiplexed data communication is performed. In the multiplexed data communication, plural data communications are simultaneously done through a single shared transmission path. An example of the multiplexed data communication is CAN (Controller Area Network) that is a vehicle bus standard. CAN communication indicates a type of communication designed to allow microcontrollers and devices to mutually communicate without requiring a host computer.

### <Definition of Controller>

A controller of the present teaching and the embodiments is a device including a communication device and a drive circuit. The communication device is connectable to a multiplex communication line and allows the controller to be capable of performing multiplexed data communication. The drive circuit is a circuit connected to each of various types of devices and controls the operation of the device, and is configured to generate and output a signal for driving the device. An example of the drive circuit is an electronic control unit (ECU).

### <Definition of First Controller>

A first controller of the present teaching and the embodiments is a controller connected to at least one device that is neither an engine motor nor a transmission control motor. For example, the first controller is connected to at least one of a display, a fuel injector, or an ignition device. For example, the first controller may be connected to an electronic apparatus which is neither a display, a fuel injector, nor an ignition device. For example, the first controller may be connected to an electronic apparatus which is neither a display, a fuel injector, nor an ignition device, in addition to at least one of a display, a fuel injector, or an ignition device. For example, the first controller may be connected to an electronic apparatus which is neither a display, a fuel injector, nor an ignition device, without being connected to a display, a fuel injector, or an ignition device. For example, when the straddled vehicle of the present teaching has a smart key device which allows the engine to start when a rider who owns a smart key approaches the vehicle, the first controller may be connected to the smart key device. For example, when the straddled vehicle of the present teaching has an electronic throttle control system, the first controller may be connected to the electronic throttle control system. For example, the first controller may be a brake controller such as an AEB (Autonomous Emergency Braking) and an EBA (Emergency Brake Assist), which is connected to a brake driving device configured to apply braking force to a front wheel unit or a rear wheel unit. The AEB is a device for performing a warning and brake assist. The EBA is a device for assisting a warning and a braking. For example, the first controller may be an ACC (Adaptive Cruise Control) connected to various types of sensors. The ACC is a device for allowing the vehicle to run with a constant inter-vehicle distance. In the present teaching, the straddled vehicle may have one first controller or plural first controllers. When the straddled vehicle has plural first controllers, each first controller has a first communication device and a first drive circuit. At least one first controller may be provided at any position in the straddled vehicle as long as the position satisfies the requirements of the present teaching.

### <Definition of Second Controller>

A second controller of the present teaching and the embodiments is a controller connected to at least one of an engine motor and/or a transmission control motor. The second controller may be connected to an electronic apparatus which is neither an engine motor nor a transmission control motor. In the present teaching, the straddled vehicle may have one second controller or plural second controllers. When the straddled vehicle has plural second controllers, each second controller has a second communication device and a second drive circuit.

### <Definition of Transmission>

A transmission of the present teaching and the embodiments is provided at at least part of a power transmission path. The power transmission path is a path through which power is transmitted from a crankshaft to at least one of a front wheel unit or a rear wheel unit. The transmission changes a transmission ratio. The transmission ratio is a ratio of rotation speed of an output shaft of the transmission to rotation speed of an input shaft of the transmission. The transmission may include a transmission configured to change a transmission ratio and transmit power of a crankshaft and a speed reducer configured to decelerate the rotation speed of the power output from the transmission by means of a gear, or the like. The transmission may be an electronic-controlled continuously variable transmission which is configured to change the transmission ratio by using a transmission control motor. The transmission may be a weight-type continuously variable transmission in which the transmission ratio is automatically changed without using a transmission control motor. The continuously variable transmission may be a belt-type continuously variable transmission or a chaintype continuously variable transmission. The transmission may be a stepped transmission in which the transmission ratio is changed as a shift drum is rotated by an operation by the rider, without using a transmission control motor, or may be an electronic-controlled stepped transmission in which the transmission ratio is changed by using a transmission control motor which changes the gear ratio of the transmission. The straddled vehicle of the present teaching may not include a transmission.

### <Definition of Transmission Control Motor>

A transmission control motor of the present teaching and the embodiments is a motor for changing the transmission ratio of a transmission. The transmission control motor is driven by electric power supplied from a battery device. If no transmission is included, the straddled vehicle of the present teaching does not include a transmission control motor. When a transmission is included, the straddled vehicle of the present teaching may or may not include a transmission control motor as described in the definition of the transmission above.

### <Definition of At Least One Engine Motor>

At least one engine motor of the present teaching and the embodiments is at least one motor which is configured to apply a torque to a crankshaft. The at least one engine motor is at least one of a rotating electric machine, an electric motor, or a generator. The rotating electric machine is a motor which is configured to apply, to the crankshaft, torque which is identical in direction with or opposite in direction to the rotational direction of the crankshaft. The rotating electric machine is, for example, a three-phase generator and is a permanent magnet generator. The electric motor is a motor which is configured to apply, to the crankshaft, torque which is identical in direction with the rotational direction of the crankshaft. The electric motor may be a starter motor which is driven only at the start of the engine. The electric motor may be driven at least in occasions that are not the start of the engine. The generator is a motor which is configured to apply, to the crankshaft, torque which is opposite in direction to the rotational direction of the crankshaft. The at least one engine motor is driven by electric power supplied from a battery device. When at least one engine motor is included, the driving source of the straddled vehicle of the present teaching may be an engine or an engine motor driven by electric power generated by an engine. The straddled vehicle of the present teaching may not include at least one engine motor.

### <Definition of Target Shaft>

A target shaft of the present teaching and the embodiments is a rotational shaft to which at least one engine motor applies torque. The target shaft is a shaft provided on a power transmission path through which power is transmitted from the crankshaft to a driving wheel of at least one of the front wheel unit or the rear wheel unit. The driving wheel is a wheel in at least one of the front wheel unit or the rear wheel unit, and receives transmitted power. The target shaft encompasses, for example, the crankshaft, the rotational shaft of at least one driving wheel (rear wheel) in the rear wheel unit, at least one driving wheel (front wheel) included in the front wheel unit, a primary shaft and a secondary shaft of the transmission, and the rotational shaft of the speed reducer.

### <Definitions of Length (Lm) of Power Line between Second Drive Circuit and Transmission Control Motor Connected to Second Drive Circuit, Length (Lg) of Power Line between Second Drive Circuit and At Least One Engine Motor, Length (Lb) of Power Line between Second Drive Circuit and Battery Device, and Length (Lc) of Multiplex Communication Line between First Communication Device and Second Communication Device>

In the present teaching and the embodiments, when the number of second controllers is one, the length (Lm) of a power line between a second drive circuit and a transmission control motor connected to the second drive circuit is the length (Lm) of a power line between a second drive circuit of that second controller and a transmission control motor connected to the second drive circuit. When the number of second controllers is more than one, the aforesaid length is the length (Lm) of a power line between a second drive circuit of each second controller and a transmission control motor connected to that second drive circuit. In the present teaching and the embodiments, when the number of second controllers is one, the length (Lg) of a power line between a second drive circuit and at least one engine motor is the length (Lg) of a power line between a second drive circuit of that second controller and at least one engine motor. When the number of second controllers is more than one, the aforesaid length is the length (Lg) of a power line between a second drive circuit of each second controller and at least one engine motor. When the number of engine motors is one, the aforesaid length is the length (Lg) of a power line between a second drive circuit and that engine motor. When the number of engine motors is more than one, the aforesaid length is the length (Lg) of a power line between a second drive circuit and each of the engine motors. In the present teaching and the embodiments, when the number of second controllers is one, the length (Lb) of a power line between a second drive circuit and a battery device is the length (Lb) of a power line between a second drive circuit of that second controller and a battery device. When the number of second controllers is more than one, the aforesaid length is the length (Lb) of a power line between a second drive circuit of each second controller and a battery device. In the present teaching and the embodiments, when the number of first controllers is one and the number of second controllers is one, the length (Lc) of a multiplex communication line between a first communication device and a second communication device is the length (Lc) of a power line between a first communication device of that first controller and a second communication device of that second controller. When the number of first controllers is one whereas the number of second controllers is more than one, the aforesaid length is the length (Lc) of a multiplex communication line between a first communication device of that first controller and a second communication device of each second controller. When the number of first controllers is more than one whereas the number of second controllers is one, the aforesaid length is the length (Lc) of a multiplex communication line between a first communication device of each first controller and a second communication device of that second controller. When the number of first controllers is more than one and the number of second controllers is more than one, the aforesaid length is the length (Lc) of a multiplex communication line between a first communication device of each first controller and a second communication device of each second controller.

### <Definition of Engine Unit Case>

An engine unit case of the present teaching and the embodiments is a case in which an engine or at least part of a transmission is accommodated. The engine unit case may be a case in which at least part of an engine is accommodated. The engine unit case may be a case in which at least part of a transmission is accommodated. The engine unit case may be a case formed by, for example, combining cases that are independently molded. One of these cases accommodates at least part of an engine whereas the other one of the cases accommodates at least part of a transmission. The engine unit case may be a case in which a case that accommodates at least part of an engine and a case that accommodates at least part of a transmission are integrally molded.

### <Definitions of Power Line and Communication Line>

A power line of the present teaching and the embodiments is a line which is connected to a battery device and through which electric power of the battery device is transmitted. A communication line of the present teaching and the embodiments is a line which is connected to a communication device or a drive circuit and through which data such as a drive signal is transmitted. A communication line may additionally function as a power line, and a power line may additionally function as a communication line.

### <Definition of Noise on Multiplex Communication Line>

Noise on a multiplex communication line in the embodiment is noise mixed in multiplexed data communication which is performed through a multiplex communication line. An influence of noise on a multiplex communication line is an influence of noise on multiplexed data communication performed through a multiplex communication line.

### <Other Definitions>

In the present specification, the end portion of a certain component means a portion obtained by combining the end of the component and the vicinity thereof.

In the present teaching and the specification, a direction along a direction A is not limited to a direction in parallel to the direction A. The direction along the direction A includes a direction which intersects with the direction A at an angle which falls within the range from -45 degrees to 45 degrees. This definition is applicable to a linear line extending along the direction A. The direction A does not indicate any specific direction. The direction A may be a vertical direction, an up-down direction, a front-rear direction, or a left-right direction.

In the present teaching, terms "including", "comprising", "having", and derivatives thereof are used to encompass not only listed items and equivalents thereof but also additional items. The terms "mounted", "connected", and "coupled" are used in broad sense. To be more specific, the terms encompass not only directly mounting, connection, and coupling but also indirect mounting, connection, and coupling. Furthermore, the terms "connected" and "coupled" do not merely indicate physical or mechanical connection and coupling. They also include direct or indirect electrical connections and couplings.

Unless defined otherwise, all terms (including technical and scientific terms) used herein have the same meaning as commonly understood by one of ordinary skill in the art to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

As used herein, the term "preferred" is non-exclusive. "Preferred" means "preferred but not limited to". In the present specification, the configuration described as "preferable" exhibits at least the above effect obtained by the configuration (1). In addition, in the present specification, the term "may" is non-exclusive. "May be" means "may be but not limited to". In the present specification, the configuration described as "may" exhibits at least the above effect obtained by the configuration (1).

In the claims, when the number of certain components is not clearly specified and is expressed in the singular when translated into English, the present teaching may have a plurality of such components. In the present teaching, the number of the constituent features may be only one.

In the present teaching, the arrangements of the above-described different aspects may be variously combined.

Before an embodiment of the present teaching is detailed, it is informed that the present teaching is not limited to the configurations and layout of elements described below and/or shown in drawings. The present teaching may be implemented as another embodiment, or as an embodiment with various changes. Furthermore, the present teaching may be implemented by suitably combining belowdescribed modifications.

### [Advantageous Effects]

In the present teaching, in regard to a straddled vehicle on which controllers connected by a multiplex communication line through which multiplexed data communication is performed and an engine unit are mounted, it is possible to suppress upsizing of the straddled vehicle while suppressing an influence of noise on the multiplex communication line.

### [Brief Description of Drawings]

FIG. 1 is a schematic diagram showing the outline of a straddled vehicle of each of First, Second, Sixth, and Seventh Embodiments.
FIG. 2 is a schematic diagram showing the layout of an engine unit and a second controller when the straddled vehicle of Third Embodiment is viewed in the direction of the rotational axis of a primary shaft member.
FIG. 3 is a schematic diagram showing the outline of a straddled vehicle of Fourth Embodiment.
FIG. 4 is a left side view of the straddled vehicle of Fourth Embodiment.
FIG. 5 is a block diagram showing controllers mounted on a straddled vehicle of Fifth Embodiment.
FIG. 6 is a block diagram showing controllers mounted on a straddled vehicle of Eighth Embodiment.
FIG. 7 is a block diagram showing controllers mounted on the straddled vehicle of Eighth Embodiment.

### [Description of Embodiments]

### (Definition of Directions)

Arrows F, B, L, R, U, and D in the figures indicate forward, rearward, leftward, rightward, upward, and downward, respectively. In this specification, a front-rear direction, a left-right direction, and an up-down direction indicate a front-rear direction, a left-right direction, and an up-down direction for a rider seated on a straddled vehicle. In this regard, it is assumed that the straddled vehicle is provided on a horizontal ground.

### (First Embodiment)

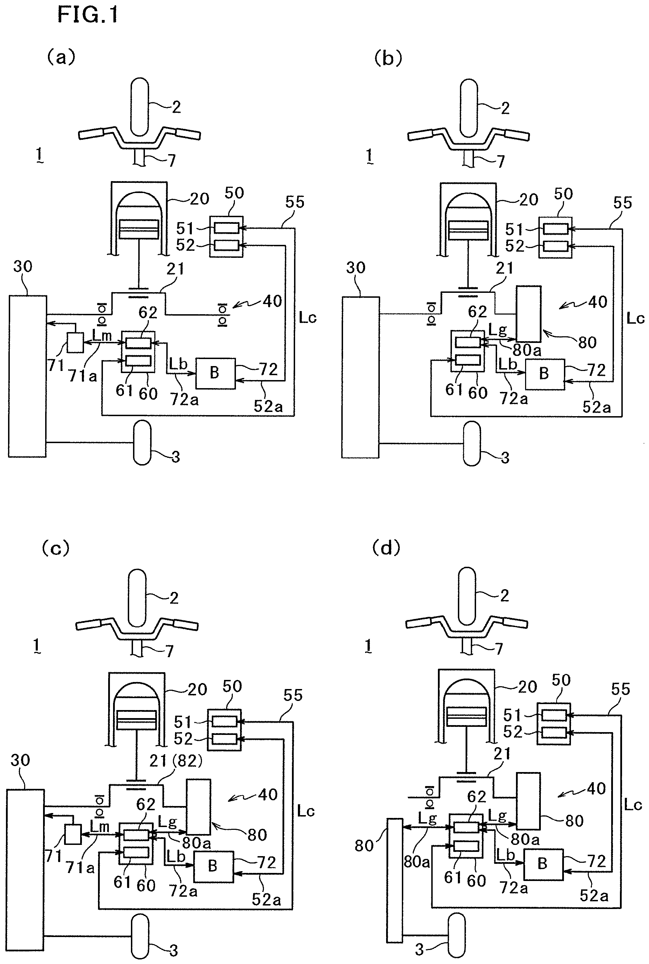

The following will describe a straddled vehicle 1 of First Embodiment of the present teaching with reference to FIG. 1. As shown in FIG. 1, the straddled vehicle 1 includes a front wheel unit 2, a rear wheel unit 3, a vehicle body frame 7, an engine unit 40, at least one first controller 50, at least one second controller 60, and a battery device 72.

The front wheel unit 2 includes at least one front wheel. The rear wheel unit 3 includes at least one rear wheel. The rear wheel unit 3 is provided rearward of the front wheel unit 2 in the vehicle front-rear direction.

The engine unit 40 includes an engine 20. The engine 20 includes a crankshaft 21. The engine unit 40 is supported by the vehicle body frame 7. The battery device 72 is supported by the vehicle body frame 7.

The straddled vehicle 1 includes at least one first controller 50 and at least one second controller 60. The at least one first controller 50 includes a first communication device 51 and a first drive circuit 52. The first communication device 51 is connected to a multiplex communication line 55 through which multiplexed data communication is performed, and is configured to be capable of performing multiplexed data communication. The first drive circuit 52 is connected to the battery device 72 by a power line (first power line) 52a and receives electric power from the battery device 72.

The at least one second controller 60 includes a second communication device 61 and a second drive circuit 62. The second communication device 61 is connected to the multiplex communication line 55 through which multiplexed data communication is performed, and is configured to be capable of performing multiplexed data communication. The second drive circuit 62 is connected to the battery device 72 by a power line 72a and receives electric power from the battery device 72. The second communication device 61 of the at least one second controller 60 is capable of at least performing multiplexed data communication with the first communication device 51 of the at least one first controller 50.

The multiplex communication line 55 connects the first communication device 51 to the second communication device 61. In other words, the at least one first controller 50 including the first communication device 51 and the at least one second controller 60 including the second communication device 61 perform multiplexed data communication with each other.

The engine unit 40 includes at least one of an engine motor 80 or a transmission control motor 71. When the engine unit 40 includes the transmission control motor 71, the engine unit 40 includes a transmission 30. The transmission 30 is configured to transmit power to at least one of the front wheel unit 2 or the rear wheel unit 3. In FIG. 1, the power is transmitted to at least one rear wheel 3a that is a driving wheel in the rear wheel unit 3. The transmission control motor 71 is a motor by which the transmission ratio of the transmission 30 is changed. The engine motor 80 is a motor by which torque is applied to a target shaft 82. The target shaft to which the at least one engine motor applies torque encompasses the crankshaft 21. For example, as shown in FIG. 1(a), the engine unit 40 may include the transmission 30 and the transmission control motor 71. For example, as shown in FIG. 1(b), the engine unit 40 may include the transmission 30 and the engine motor 80. For example, as shown in FIG. 1(c), the engine unit 40 may include the transmission 30, the transmission control motor 71, and the engine motor 80. For example, as shown in FIG. 1(d), the engine unit 40 may include plural engine motors 80 including a motor configured to apply a torque to the crankshaft 21 which is the target shaft 82 and a motor configured to apply a torque to a rotational shaft 3b of the rear wheel 3a.

A power transmission path of the engine unit 40 will be described. The power transmission path is a path through which power generated by the engine 20 is transmitted from the crankshaft 21 to the rear wheel unit 3. The crankshaft 21 is the upstream end of the power transmission path. The rear wheel unit 3 is the downstream end of the power transmission path. The transmission 30 is arranged to be able to transmit the power of the crankshaft 21 to the rear wheel unit 3. The transmission 30 is provided in at least part of the power transmission path of the engine unit 40, which extends from the crankshaft 21 to the rear wheel unit 3.

The second controller 60 includes the second communication device 61 and the second drive circuit 62. The second drive circuit 62 is connected to the battery device 72 by a power line (second power line) 72a and receives electric power from the battery device 72. The second drive circuit 62 is connected to the transmission control motor 71 by a power line (third power line) 71a. The second drive circuit 62 is connected to at least one engine motor 80 by a power line (third power line) 80a. The second drive circuit 62 generates drive signals by which the battery device 72, the transmission control motor 71, and the engine motor 80 are driven. The transmission control motor 71 and the engine motor 80 are controlled by at least one second controller 60. The battery device 72 supplies electric power at least to the transmission control motor 71 and the at least one engine motor 80 through the second drive circuit 62. The battery device 72 may be directly connected to the transmission control motor 71 and the at least one engine motor 80 connected to the second drive circuit 62, so as to supply electric power thereto.

The second drive circuit 62 included in the at least one second controller 60 is connected to at least one of the battery device 72, the transmission control motor 71, or the at least one engine motor 80. The at least one second controller 60 is provided so that the length Lm of the power line 71a between the second drive circuit 62 and the transmission control motor 71 and the length Lg of the power line 80a between the second drive circuit 62 and the at least one engine motor 80 are shorter than the length Lb of the power line 72a between the second drive circuit 62 and the battery device 72. When the at least one engine motor 80 connected to the second drive circuit 62 is plural engine motors 80, the length of a power line 80a between a second drive circuit 62 and an engine motor 80, which is the longest among plural engine motors 80, is set as the length Lg. The at least one second controller 60 is provided so that the length Lc of the multiplex communication line 55 between the first communication device 51 and the second communication device 61 is longer than the length Lm of the power line 71a between the second drive circuit 62 and the transmission control motor 71 and the length Lg of the power line 80a between the second drive circuit 62 and the at least one engine motor 80.

According to First Embodiment of the present teaching, the battery device 72 supplies electric power to the transmission control motor 71 and the at least one engine motor 80 connected to the second drive circuit 62. The battery device 72 supplies electric power to the transmission control motor 71 and the at least one engine motor 80 connected to the second drive circuit 62, through the second drive circuit 62. The battery device 72 may be directly connected to the transmission control motor 71 and the at least one engine motor 80 connected to the second drive circuit 62, so as to supply electric power thereto. For this reason, a relatively large current flows in the power line 71a connecting the second drive circuit 62 to the transmission control motor 71 and the power line 80a connecting the second drive circuit 62 to the at least one engine motor 80. The longer the power line 71a and the power line 80a are, the more noise is likely to be generated in the multiplex communication line 55. That is to say, when the length of the power line 71a between the second drive circuit 62 and the transmission control motor 71 connected to the second drive circuit 62 and the length of the power line 80a between the second drive circuit 62 and the engine motor 80 connected to the second drive circuit 62 are longer than the length of the multiplex communication line 55 between the first communication device 51 and the second communication device 61, noise tends to be generated in the multiplex communication line 55. Furthermore, because the battery device 72 is relatively large, the degree of freedom in the layout of the battery device 72 is low. Therefore, on account of the limitation on the layout of the battery device 72, the length of the power line 72a connecting the battery device 72 to the second drive circuit 62 may not be changeable. On this account, when the power line 71a between the second drive circuit 62 and the transmission control motor 71 connected to the second drive circuit 62 and the power line 80a between the second drive circuit 62 and the at least one engine motor 80 connected to the second drive circuit 62 are longer than the power line 72a between the second drive circuit 62 and the battery device 72, noise tends to be generated in the multiplex communication line 55. The at least one second controller 60 is therefore provided so that the power line 71a connecting the second drive circuit 62 to the transmission control motor 71 connected to the second drive circuit 62 and the power line 80a connecting the second drive circuit 62 with the at least one engine motor 80 connected to the second drive circuit 62 are shorter than the power line 72a between the second drive circuit 62 and the battery device 72. This arrangement makes it possible to suppress the generation of noise itself as compared to a case where the power line 71a connecting the second drive circuit 62 to the transmission control motor 71 connected to the second drive circuit 62 and the power line 80a connecting the second drive circuit 62 to the at least one engine motor 80 connected to the second drive circuit 62 are longer than the power line 72a between the second drive circuit 62 and the battery device 72. It is therefore possible to suppress an influence of noise on the multiplex communication line 55 without providing the multiplex communication line 55 at a location remote from the battery device 72, the transmission control motor 71 and the at least one engine motor 80.

In addition to the above, the at least one second controller 60 is provided so that the power line 71a between the second drive circuit 62 and the transmission control motor 71 connected to the second drive circuit 62 and the power line 80a between the second drive circuit 62 and the at least one engine motor 80 connected to the second drive circuit 62 are longer than the multiplex communication line 55 between the first communication device 51 and the second communication device 61. In other words, the at least one first controller 50 can be provided so that the length of the multiplex communication line 55 between the first communication device 51 and the second communication device 61 is longer than the length of the power line 71a between the second drive circuit 62 and the transmission control motor 71 and the length of the power line 80a between the second drive circuit 62 and the at least one engine motor 80. It is therefore possible to elongate the multiplex communication line 55 between the first communication device 51 and the second communication device 61, with the result that the at least one first controller 50 including the first communication device 51 can be provided at a location remote from the at least one second controller 60. With this arrangement, it is possible to elongate the multiplex communication line 55 between the first communication device 51 and the second communication device 61. Accordingly, the degree of freedom in the layout of the at least one first controller 50 including the first communication device 51 is improved. As a result, the upsizing of the vehicle is suppressed.

In this way, in regard to the straddled vehicle 1 on which the controllers 50 and 60 connected by the multiplex communication line 55 through which multiplexed data communication is performed are mounted, it is possible to suppress upsizing of the straddled vehicle 1 while suppressing an influence of noise on the multiplex communication line 55.

### (Second Embodiment)

The following will describe a straddled vehicle 1 of Second Embodiment of the present teaching with reference to FIG. 1. A straddled vehicle 1 of Second Embodiment has the following arrangements, in addition to those described in First Embodiment.

As shown in FIG. 1, at least one second controller 60 of the straddled vehicle 1 is provided at a location where the length Lc of a multiplex communication line 55 between a first communication device 51 and a second communication device 61 is longer than the length Lb of a power line 72a between a second drive circuit 62 and a battery device 72.

According to Second Embodiment of the present teaching, the length Lc of the multiplex communication line 55 between the first communication device 51 and the second communication device 61 is longer than the length Lb of the power line between the second drive circuit 62 and the battery device 72. Therefore, noise is less likely to be generated in the multiplex communication line 55. On this account, it is possible to suppress an influence of noise on the multiplex communication line 55 connecting the first communication device 51 to the second communication device 61, without providing the multiplex communication line 55 at a location remote from a rotating electric machine 80 and the battery device 72.

### (Third Embodiment)

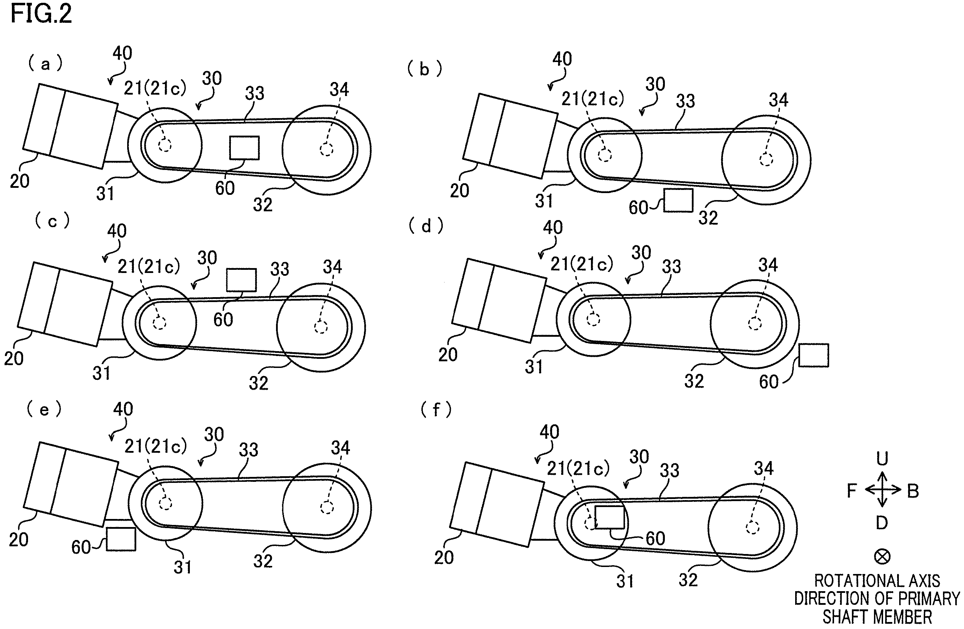

The following will describe a straddled vehicle 1 of Third Embodiment of the present teaching with reference to FIG. 2. A straddled vehicle 1 of Third Embodiment has the following arrangements, in addition to those described in First Embodiment or Second Embodiment.

As shown in FIG. 2, an engine unit 40 includes a transmission 30. The transmission 30 is configured to be capable of transmitting the power of an engine 20. The transmission 30 includes a primary sheave 31, a secondary sheave 32, and a belt 33. The primary sheave 31 is provided forward of the secondary sheave 32.

The transmission 30 is configured to transmit the power of a crankshaft 21 by changing the transmission ratio. The transmission 30 is a continuously variable transmission with no gears. The transmission 30 may encompass a continuously variable transmission and a speed reducer configured to decelerate the rotation speed of the power output from the continuously variable transmission by means of gears, etc. The continuously variable transmission may be an electronic-controlled continuously variable transmission in which a movable sheave of a later-described primary sheave 31 is moved by a transmission control motor 71 or a weight-type continuously variable transmission in which a movable sheave of a later-described primary sheave 31 is moved by centrifugal force acting on a weight.

The primary sheave 31 is provided at a primary shaft member 21c by which the power of a crankshaft 21 is transmitted. The primary sheave 31 is arranged to be rotatable together with the primary shaft member 21c. The primary shaft member 21c may be integrated with and coaxial with the crankshaft 21. The primary shaft member 21c may be provided so that the rotational axis direction thereof is in parallel to the rotational axis direction of the crankshaft 21, so that the power of the crankshaft 21 is transmitted by a power transmission member (not illustrated). The primary sheave 31 is arranged to be rotatable together with the crankshaft 21. The primary sheave 31 includes a movable sheave movable in the axial direction of the primary shaft member 21c and a fixed sheave immovable in the axial direction of the primary shaft member 21c, and the width of a groove formed between the movable sheave and the fixed sheave is varied. The movable sheave of the primary sheave 31 is, for example, moved by the transmission control motor 71 or by the centrifugal force acting on the weight. The winding diameter of the belt 33 is therefore varied on the primary sheave 31.

The secondary sheave 32 is provided on a secondary shaft member 34 so that the rotational axis direction of the secondary sheave 32 is in parallel to the rotational axis direction of the primary shaft member 21c. The secondary sheave 32 is arranged to be rotatable together with the secondary shaft member 34. The secondary sheave 32 includes a movable sheave movable in the axial direction of the secondary shaft member 34 and a fixed sheave immovable in the axial direction of the secondary shaft member 34, and the width of a groove formed between the movable sheave and the fixed sheave is varied. The movable sheave of the secondary sheave 32 is, for example, biased toward the fixed sheave by a spring. The winding diameter of the belt 33 is therefore varied on the secondary sheave 32. A clutch is provided at the secondary shaft member 34. The clutch is able to connect and disconnect the transmission of power from the secondary sheave 32 to the secondary shaft member 34.

The belt 33 is formed to be annular in shape. The belt 33 is, for example, a transmission belt made of rubber or resin. The belt 33 is, for example, a V belt that is V-shaped in cross section. The belt 33 is wound onto the primary sheave 31 and the secondary sheave 32. The belt 33 is wound onto the movable sheave and the fixed sheave of the primary sheave 31. The belt 33 is wound onto the movable sheave and the fixed sheave of the secondary sheave 32. The belt 33 rotates as the primary sheave 31 rotates in accordance with the rotation of the crankshaft 21. The secondary sheave 32 rotates as the belt 33 rotates in accordance with the rotation of the primary sheave 31. The secondary sheave 32 rotates together with the primary sheave 31 as the belt 33 rotates. The belt 33 transmits, to the secondary sheave 32, the power transmitted from the crankshaft 21 to the primary sheave 31. As the winding diameter of the belt 33 wound on the primary sheave 31 and the secondary sheave 32 is varied, the transmission ratio is changed.

The transmission 30 is provided in at least part of the power transmission path of the engine unit 40, which extends from the crankshaft 21 to the rear wheel unit 3. The transmission 30 is capable of transmitting power by the primary sheave 31 provided on the crankshaft 21. The power of the crankshaft 21 is transmitted to the secondary shaft member 34 where the secondary sheave 32 is provided. The belt 33 is wound onto this secondary sheave 32 and the primary sheave 31. The power of the secondary shaft member 34 is transmitted to at least one rear wheel of the rear wheel unit 3.

The at least one second controller 60 is provided at a location where each second controller 60 does not at least partially overlap the primary shaft member 21c and the secondary shaft member 34 when viewed in the rotational axis direction of the primary shaft member 21c. The at least one second controller 60 may be provided at a location where each second controller 60 does not overlap the primary shaft member 21c and the secondary shaft member 34 at all. The at least one second controller 60 may be provided at a location where each second controller 60 does not overlap the primary sheave 31 and the secondary sheave 32 at all. For example, as shown in FIG. 2(a) to FIG. 2(c) in which the engine unit is viewed in the rotational axis direction of the primary shaft member 21c, the second controller 60 may be provided between the primary sheave 31 and the secondary sheave 32 in the front-rear direction. That is to say, the primary sheave 31, the second controller 60, and the secondary sheave 32 are provided in this order along the vehicle front-rear direction. As shown in FIG. 2(a), the second controller 60 may be provided to at least partially overlap the primary sheave 31 and the secondary sheave 32 in the up-down direction. As shown in FIG. 2(b) and 2(c), the second controller 60 may be provided not to overlap the primary sheave 31 and the secondary sheave 32 in the up-down direction. As shown in FIG. 2(b) and 2(c), for example, the second controller 60 may be provided below the primary sheave 31 and the secondary sheave 32 in the up-down direction. As shown in FIG. 2(c), for example, the second controller 60 may be provided above the primary sheave 31 and the secondary sheave 32 in the up-down direction. As shown in FIG. 2(d), the second controller 60 may be provided rearward of the primary sheave 31 and the secondary sheave 32 in the front-rear direction. As shown in FIG. 2(e), the second controller 60 may be provided forward of the primary sheave 31 and the secondary sheave 32 in the front-rear direction. As shown in FIG. 2(f), at least one second controller 60 may be provided to at least partially overlap the primary sheave 31 and the secondary sheave 32. As shown in FIG. 2(f), at least one second controller 60 may be provided to partially overlap the primary shaft member 21c and the secondary shaft member 34. The at least one second controller 60 may be provided to entirely overlap the primary sheave 31 and the secondary sheave 32.

According to Third Embodiment of the present teaching, the at least one second controller 60 is provided at a location where each second controller 60 does not at least partially overlap the primary shaft member 21c and the secondary shaft member 34 when viewed in the rotational axis direction of the primary shaft member 21c. When viewed in the rotational axis direction of the primary shaft member 21c, there is a relatively large space at a location that does not overlap the primary shaft member 21c and the secondary shaft member 34. A space where at least one second controller 60 is provided is easily secured in this way. Because the degree of freedom in the layout of the at least one second controller 60 is high, it is possible to provide the at least one second controller 60 while suppressing the upsizing of the straddled vehicle 1.

### (Fourth Embodiment)

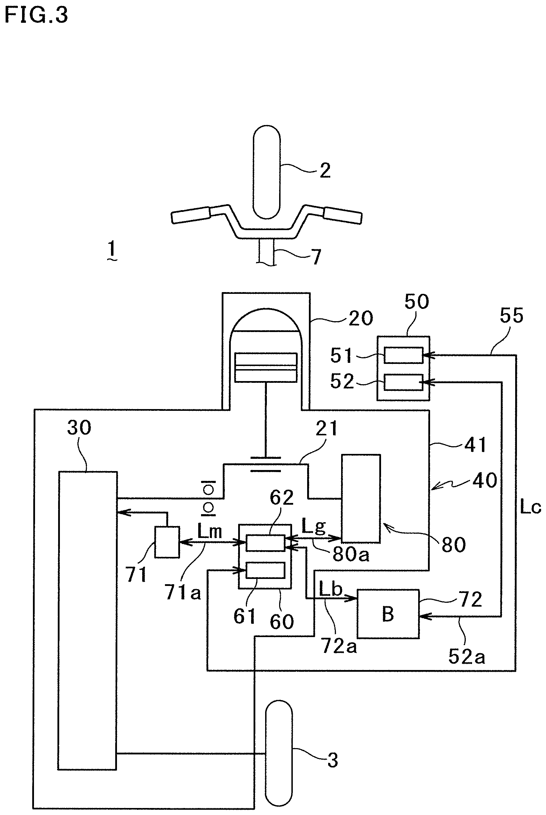

The following will describe a straddled vehicle 1 of Fourth Embodiment of the present teaching with reference to FIG. 3. A straddled vehicle 1 of Fourth Embodiment has the following arrangements, in addition to those described in any of First Embodiment to Third Embodiment.

As shown in FIG. 3, the straddled vehicle 1 includes an engine unit case 41. The engine unit case 41 stores at least part of at least one of an engine 20 or a transmission 30.

At least one second controller 60 is supported by the engine unit case 41. The at least one second controller 60 may be directly supported by the engine unit case 41, or may be indirectly supported by the engine unit case 41 through the intermediary of another member. For example, the at least one second controller 60 may be supported by and arranged on a wall surface inside the engine unit case 41. Alternatively, for example, the at least one second controller 60 may be supported by the engine unit case 41 such that the controller 60 is provided in an isolation chamber provided inside the engine unit case 41. For example, the at least one second controller 60 may be supported by and arranged on a wall surface outside the engine unit case 41. Alternatively, for example, the at least one second controller 60 may be supported by the engine unit case 41 such that the controller 60 is provided in a recess formed in the outer wall surface of the engine unit case 41. In this case, the engine unit case 41 may have a cover to cover the at least one second controller 60 provided in the recess of the engine unit case 41.

The at least one first controller 50 may or may not be supported by the engine unit case 41.

According to this arrangement, the at least one second controller 60, which includes a second drive circuit 62 connected to a battery device 72 and at least one of a transmission control motor 71 or at least one engine motor 80, is provided at the engine unit case 41 which at least partially accommodates at least one of an engine 20 or a transmission 30. In other words, the at least one second controller 60 is provided at a location relatively close to at least one of the battery device 72, the transmission control motor 71, or the at least one engine motor 80. This arrangement makes it possible to suppress the generation of noise as compared to a case where the at least one second controller 60 is provided at a location relatively remote from at least one of the battery device 72, the transmission control motor 71, or the at least one engine motor 80. An influence of noise on a multiplex communication line 55 is therefore suppressed.

The at least one second controller 60 is provided at the engine unit case 41. The engine unit case 41 has a relatively large surface in order to accommodate at least part of at least one of the engine 20 or the transmission 30. On this account, in the engine unit case 41, a space where the at least one second controller 60 is provided is easily secured. As such, because the degree of freedom in the layout of the at least one second controller 60 is high in the engine unit case 41, it is possible to provide the at least one second controller 60 while suppressing the upsizing of the straddled vehicle 1.

### (Fifth Embodiment)

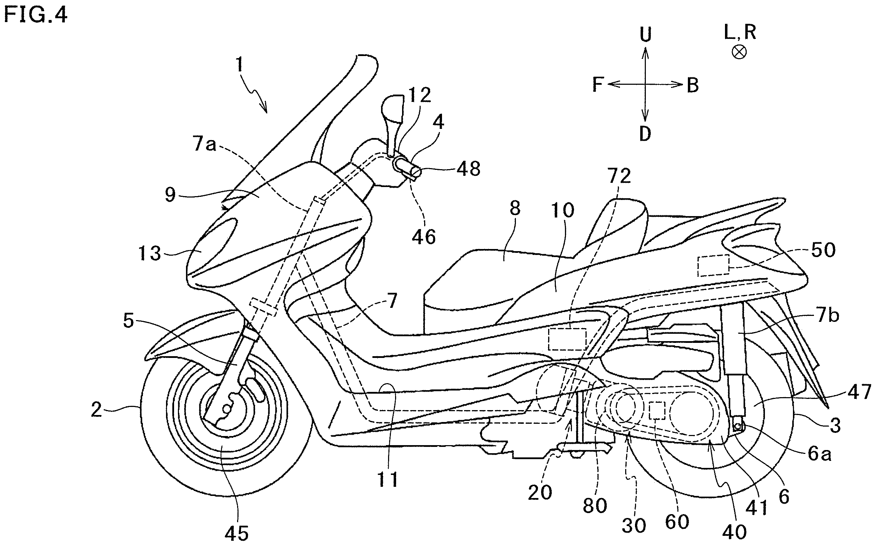

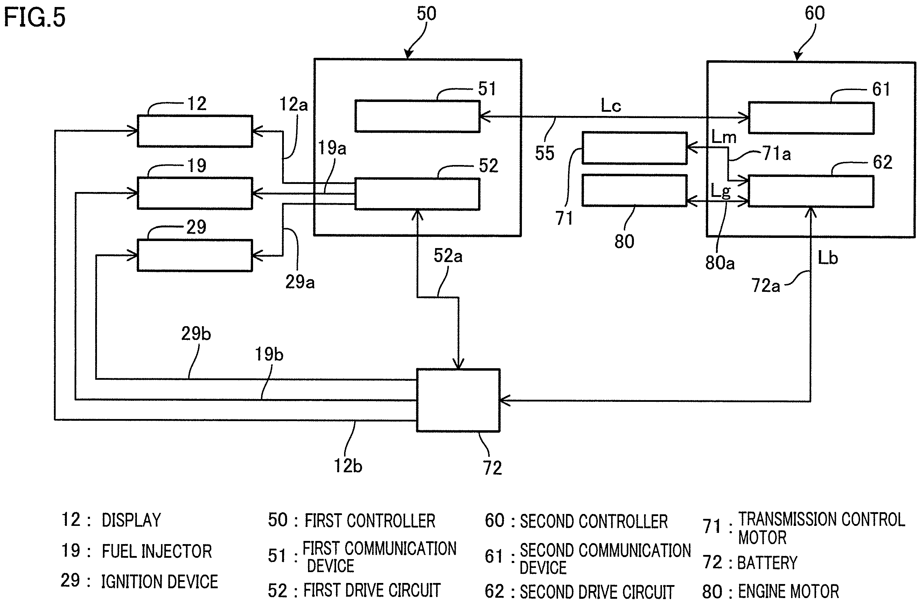

The following will describe a straddled vehicle 1 of Fifth Embodiment of the present teaching with reference to FIG. 4 and FIG. 5. A straddled vehicle 1 of Fourth Embodiment has the following arrangements, in addition to those described in any of First Embodiment to Fourth Embodiment. In Fourth Embodiment of the present teaching, a motorcycle is taken as an example of the straddled vehicle. FIG. 4 shows a straddled vehicle 1 which is provided in an upright state on a horizontal road surface.

As shown in FIG. 4, the straddled vehicle 1 includes a front wheel unit 2, a rear wheel unit 3, a vehicle body frame 7, an engine unit 40, at least one first controller 50, and at least one second controller 60. In FIG. 4, parts of the vehicle body frame 7 are indicated by dotted lines.

The front wheel unit 2 includes one front wheel. The rear wheel unit 3 includes one rear wheel. The rear wheel unit 3 is provided rearward of the front wheel unit 2 in the vehicle left-right direction. A front braking device 45 is provided at the front wheel unit 2. A rear braking device 47 is provided at the rear wheel unit 3. The front braking device 45 is configured to be capable of applying front wheel braking force to the front wheel unit 2. The rear braking device 47 is configured to be capable of applying rear wheel braking force to the rear wheel unit 3. A front brake operator 46 is operated by the rider in order to apply the front wheel braking force to the front wheel unit 2. The front brake operator 46 is, for example, a right brake lever provided at a later-described steering wheel unit 4. A rear brake operator 48 is operated by the rider in order to apply the rear wheel braking force to the rear wheel unit 3. The rear brake operator 48 is, for example, a left brake lever provided at the later-described steering wheel unit 4. When the front brake operator 46 is operated, the front braking device 45 is activated and front wheel braking force is generated. When the rear brake operator 48 is operated, the rear braking device 47 is activated and rear wheel braking force is generated.

The vehicle body frame 7 is an underbone-type vehicle body frame. The vehicle body frame 7 is pipeshaped and includes a head pipe 7a at a front portion. A steering shaft (not illustrated) is rotatably inserted into the head pipe 7a. An upper end portion of the steering shaft is coupled to the steering wheel unit 4. Upper end portions of paired front forks 5 are secured to the steering wheel unit 4. A lower end portion of each front fork 5 supports the front wheel unit 2. The front wheel unit 2 is steered by operating the steering wheel unit 4. As the steering wheel unit 4 is rotated in the left-right direction, a plane passing through the center in the width direction of the front wheel unit 2 is inclined with respect to the front-rear direction (FB direction).

The vehicle body frame 7 supports the engine unit 40 in a swingable manner. A rear end portion of the engine unit 40 supports the rear wheel unit 3. The engine unit case 41 is included in the engine unit 40. The engine unit 40 is connected to one end portion of the rear suspension 7b at a boss portion 6a. The other end portion of the rear suspension 7b is attached to the vehicle body frame 7. The rear suspension 7b is configured to expand and contract in the up-down direction.

The seat 8 is supported at an upper part of the vehicle body frame 7. An upper portion of each front fork 5 is covered with a front cover 9. Side covers 10 are provided straight below the seat 8. Step boards 11 are provided between the front cover 9 and the side cover 10. The step boards 11 are provided on the left and right sides of a lower portion of the straddled vehicle 1, respectively.

The straddled vehicle 1 has a headlight unit (illumination device) 13 which is configured to emit light in the vehicle forward direction. The headlight unit 13 is supported by the vehicle body frame 7 through a support member (not illustrated). The headlight unit 13 is connected to a later-described battery device 72. The headlight unit 13 is switched between a connection state of being connected to the battery device 72 and a cut-off state of being disconnected from the battery device 72, by a switch on the steering wheel unit 4, for example. In the connection state of being connected to the battery device 72, the headlight unit 13 emits light in the vehicle forward direction. In the cut-off state of being disconnected from the battery device 72, the headlight unit 13 does not emit light in the vehicle forward direction. The headlight unit 13 may be connected to the first drive circuit 52 and controlled by at least one first controller 50.

A fuel tank (not illustrated) is provided inside the side covers 10 that are straight below the seat 8. The fuel tank is supported by the vehicle body frame 7. The fuel tank stores fuel. The fuel stored in the fuel tank is supplied to a combustion chamber of the engine 20 by a later-described fuel injector 19.

The battery device 72 is provided inside the side covers 10 that are straight below the seat 8. The battery device 72 is supported by the vehicle body frame 7. The battery device 72 is connected to the first drive circuit 52 of the at least one first controller 50 by a power line 52a. The battery device 72 is connected to the second drive circuit 62 of the at least one second controller 60 by a power line 72a. The battery device 72 supplies electric power to a display 12, a fuel injector 19, and an ignition device 29 that are connected by a communication line 12a, a communication line 19a, and a communication line 29a. Through the at least one second controller 60, the battery device 72 supplies electric power to a rotating electric machine 80 connected to the second drive circuit 62 by a power line 80a. To the at least one first controller 50, various unillustrated sensors may be connected by power lines. In this case, the battery device 72 supplies electric power to electronic devices such as the unillustrated sensors connected to the at least one first controller 50 by power lines. To the at least one second controller 60, various unillustrated sensors may be connected by power lines. In this case, the battery device 72 supplies electric power to electronic devices such as the unillustrated sensors connected to the at least one second controller 60 by power lines. The battery device 72 includes a battery management device (not illustrated) which is configured to monitor charging and discharging of the battery main body.

The steering wheel unit 4 is provided with an accelerator grip (not illustrated) and a brake lever (not illustrated). A right grip of the steering wheel unit 4 constitutes the accelerator grip. The accelerator grip is operated by the rider and rotated in the front-rear direction. The accelerator grip is operated for adjusting the output of the engine. The brake lever is provided at the right grip of the steering wheel unit 4. The brake lever is operated by the rider. The brake lever is operated for braking the rotation of the front wheel unit 2. The steering wheel unit 4 is provided with various switches (not illustrated) such as a main switch. These switches are connected to the at least one first controller 50. The steering wheel unit 4 is provided with the display 12. The display 12 is configured to display vehicle speed, engine rotation speed, and the like. The display 12 is further provided with an indicator (indicator lamp).

As shown in FIG. 5, the straddled vehicle 1 includes at least one first controller 50 and at least one second controller 60.

The at least one second controller 60 includes a second communication device 61 and a second drive circuit 62. The second communication device 61 is connected to a multiplex communication line 55 to allow the at least one second controller 60 to perform multiplexed data communication. The second drive circuit 62 is connected to the battery device 72 by a power line 62a and receives electric power from the battery device 72.

The at least one first controller 50 includes a first communication device 51 and a first drive circuit 52. The first communication device 51 is connected to the multiplex communication line 55 and is capable of performing multiplexed data communication. The first drive circuit 52 is connected to the battery device 72 by the power line 52a and receives electric power from the battery device 72.

The first drive circuit 52 is connected to the display 12 by the communication line 12a. The battery device 72 is connected to the display 12 by a power line (forth power line) 12b to supply electric power to the display 12. The first drive circuit 52 generates a drive signal by which the display 12 is driven. In other words, the first drive circuit 52 generates a drive signal for causing the display 12 to display information such as vehicle speed and engine rotation speed, and sends the drive signal to the display 12 through the communication line 12a. Furthermore, the first drive circuit 52 generates a drive signal for turning on and off an indicator of the display 12 and sends the drive signal to the display 12. The display 12 is switched between a connection state of being connected to the battery device 72 and a cut-off state of being disconnected from the battery device 72, by a switch on the steering wheel unit 4, for example. In the connection state of being connected to the battery device 72, the display 12 displays information based on the drive signal sent from the first drive circuit 52. In the cut-off state of being disconnected from the battery device 72, the display 12 does not display information.

The first drive circuit 52 is connected to the fuel injector 19 by the communication line 19a. The first drive circuit 52 is connected to the ignition device 29 by the communication line 29a. The battery device 72 is connected to the fuel injector 19 by a power line (forth power line) 19b to supply electric power to the fuel injector 19. The battery device 72 is connected to the ignition device 29 by a power line (forth power line) 29b to supply electric power to the ignition device 29. The first drive circuit 52 generates a drive signal for causing the fuel injector 19 to inject and supply fuel to the engine 20, and sends the signal to the fuel injector 19. Furthermore, the first drive circuit 52 generates a drive signal for causing the ignition device 29 to ignite fuel supplied to the engine 20, and sends the signal to an ignition coil of the ignition device 29. In this way, the at least one first controller 50 controls the display 12, the fuel injector 19, and the ignition device 29.

The multiplex communication line 55 connects the first communication device 51 to the second communication device 61. In other words, the at least one first controller 50 including the first communication device 51 and the at least one second controller 60 including the second communication device 61 perform multiplexed data communication. For example, the at least one second controller 60 sends a drive signal generated by the second drive circuit 62 and related to the rotating electric machine 80 to the at least one first controller 50 by the multiplexed data communication through the multiplex communication line 55, and causes the display 12 to display the information.

The length of the multiplex communication line 55 between the first communication device 51 and the second communication device 61 is termed as length Lc. The length of the power line 80a between the second drive circuit 62 and the rotating electric machine 80 connected to the second drive circuit 62 is termed as length Lg. The length of the power line 72a between the second drive circuit 62 and the battery device 72 is termed as length Lb. The length Lc is longer than the length Lg. The length Lg is shorter than the length Lb. The length Lc is longer than the length Lb.

According to Fifth Embodiment of the present teaching, the at least one first controller 50 includes the first drive circuit 52 that is connected to the display 12, the fuel injector 19, and the ignition device 29 by the communication lines 12a, 19a, and 29a. The battery device 72 is connected to the display 12, the fuel injector 19, and the ignition device 29 connected to the first drive circuit 52 by the power lines 12b, 19b, and 29b, and supplies electric power thereto. A current flowing through the power lines 12b, 19b, and 29b between the battery device 72 and the display 12, the fuel injector 19, and the ignition device 29 connected to the first drive circuit 52 is smaller than a current flowing through the power line 80a between the rotating electric machine 80 and the second drive circuit 62. On this account, even if the power lines 12b, 19b, and 29b between the battery device 72 and the display 12, the fuel injector 19, and the ignition device 29 connected to the first drive circuit 52 are elongated, an influence of noise on the multiplex communication line 55 connecting the first communication device 51 to the second communication device 61 is suppressed when the power line 80a between the second drive circuit 62 and the rotating electric machine 80 connected to the second drive circuit 62 is short. Therefore, even if the lengths of the power lines 12b, 19b, and 29b between the battery device 72 and the display 12, the fuel injector 19, and the ignition device 29 connected to the first drive circuit 52 are elongated, an influence of noise on the multiplex communication line 55 connecting the first communication device 51 to the second communication device 61 is suppressed by suppressing the generation of the noise, when either the power line 71a between the second drive circuit 62 and the transmission control motor 71 connected to the second drive circuit 62 or the power line 80a between the second drive circuit 62 and at least one of the at least one engine motor 80 connected to the second drive circuit 62 is short. Furthermore, it is possible to elongate at least one of the lengths of the power lines 12b, 19b, and 29b between the battery device 72 and the display 12, the fuel injector 19, and the ignition device 29 connected to the first drive circuit 52. Accordingly, the degree of freedom in the layout of the at least one first controller 50 is improved. As a result, the upsizing of the straddled vehicle 1 is suppressed.

### (Sixth Embodiment)

The following will describe a straddled vehicle 1 of Sixth Embodiment of the present teaching with reference to FIGs. 1(b), 1(c), and 1(d). A straddled vehicle 1 of Sixth Embodiment has the following arrangements, in addition to those described in any of First Embodiment to Fifth Embodiment.

At least one engine motor 80 connected to a second drive circuit 62 is at least one of a rotating electric machine, an electric motor, or a generator. The rotating electric machine is configured to apply, to a target shaft 82, torque which is identical in direction with or opposite in direction to the rotational direction of a crankshaft 21. The electric motor is configured to apply, to the target shaft 82, torque which is identical in direction with the rotational direction of the crankshaft 21. The generator is configured to apply, to the target shaft 82, torque which is opposite in direction to the rotational direction of the crankshaft 21.

The following will describe a case where the at least one engine motor 80 connected to the second drive circuit 62 is a rotating electric machine. As shown in FIGs. 1(b) and 1(c), the rotating electric machine 80 is connected to the crankshaft 21. The target shaft 82 is the crankshaft 21. The rotating electric machine 80 is a motor which is configured to apply, to the crankshaft 21, torque which is identical in direction with or opposite in direction to the rotational direction of the crankshaft 21. The crankshaft 21 and the rotating electric machine 80 are provided to be coaxial, for example. The rotating electric machine 80 is, for example, a three-phase generator and is a permanent magnet generator. The rotating electric machine 80 is connected to a battery device 72. Driving states of the rotating electric machine 80 are a power generation state and a powering state. The power generation state is a driving state in which the rotating electric machine 80 generates power by applying torque in a reverse rotational direction of the crankshaft 21 to the crankshaft 21. The reverse rotational direction of the crankshaft 21 is opposite to the rotational direction of the crankshaft 21. In other words, in the power generation state, the rotating electric machine 80 absorbs the torque from the crankshaft 21. The electric power generated by the rotating electric machine 80 is supplied to the battery device 72 through the second controller 60 and stored in the battery device 72. In the powering state, the rotating electric machine 80 applies torque in a positive rotational direction of the crankshaft 21 to the crankshaft 21 so as to rotate the crankshaft 21 in the positive rotational direction. The positive rotational direction of the crankshaft 21 is identical with the rotational direction of the crankshaft 21. In other words, in the powering state, the electric power of the battery device 72 is supplied to the rotating electric machine 80 through the second controller 60 and rotates the crankshaft 21 in the positive direction. For example, at the start of the engine, the rotating electric machine 80 is driven in the powering state and functions as an electric motor. Meanwhile, for example, in normal driving after the start of the engine, the rotating electric machine 80 is driven in the powering state or the power generation state. The rotating electric machine 80 may be constructed as a device functioning as both an electric motor and a generator, or may be constructed so that an electric motor and a generator are different devices.

The second drive circuit 62 is connected to the battery device 72 by a power line 72a. The second drive circuit 62 is connected to the rotating electric machine 80 by a power line 80a. The second drive circuit 62 generates a drive signal by which the rotating electric machine 80 is driven. In other words, the second drive circuit 62 generates a drive signal required for causing the rotating electric machine 80 to apply a torque in the same direction as the rotational direction of the crankshaft 21 to the crankshaft 21, and sends the signal to the rotating electric machine 80. Upon receiving this drive signal, the rotating electric machine 80 supplies the electric power stored in the battery device 72 to the second drive circuit 62 through the power line 72a. The second drive circuit 62 supplies the electric power supplied from the battery device 72 to the rotating electric machine 80 through the power line 80a. Meanwhile, the second drive circuit 62 generates a drive signal required for causing the rotating electric machine 80 to apply a torque in the direction opposite to the rotational direction of the crankshaft 21 to the crankshaft 21, and sends the signal to the rotating electric machine 80. Upon receiving this drive signal, the rotating electric machine 80 rotates the crankshaft 21 in the direction opposite to its rotational direction, and sends the electric power generated by the rotating electric machine 80 to the second drive circuit 62 through the power line 80a. The second drive circuit 62 supplies the power generated by the rotating electric machine 80 to the battery device 72 through the power line 72a. As described above, the second drive circuit 62 controls the rotating electric machine 80. Based on a drive signal from the second drive circuit 62, the rotating electric machine 80 may receive electric power from the battery device 72 through a regulator, or may supply electric power to the battery device 72 through a regulator.

The following will describe a case where the at least one engine motor 80 connected to the second drive circuit 62 is a starter motor. As shown in FIG. 1(a) and FIG. 1(c), the starter motor 80 is connected to a crankshaft 21. The target shaft 82 is the crankshaft 21. The starter motor 80 is a motor which is configured to apply a torque which is identical in direction with the rotational direction of the crankshaft 21 to the crankshaft 21 at the start of the engine. The crankshaft 21 and the starter motor 80 are provided to be coaxial, for example. The starter motor 80 is connected to a battery device 72. The starter motor 80 is configured to apply a torque which is identical in direction with the rotational direction of the crankshaft 21 to the crankshaft 21 so as to rotate the crankshaft 21 in a positive rotational direction. The starter motor 80 rotates the crankshaft 21 in the positive rotational direction as the electric power of the battery device 72 is supplied to the starter motor 80 through a second controller 60.

The second drive circuit 62 is connected to the battery device 72 by a power line 72a. The second drive circuit 62 is connected to the starter motor 80 by a power line 80a. The second drive circuit 62 generates a drive signal by which the starter motor 80 is driven. In other words, the second drive circuit 62 generates a drive signal required for causing the starter motor 80 to apply a torque in the same direction as the rotational direction of the crankshaft 21 to the crankshaft 21, and sends the signal to the starter motor 0. Upon receiving this drive signal, the starter motor 80 sends the electric power stored in the battery device 72 to the second drive circuit 62 through the power line 72a. The second drive circuit 62 supplies the electric power supplied from the battery device 72 to the starter motor 80 through the power line 80a. As described above, the second drive circuit 62 controls the starter motor 80. The starter motor 80 may receive electric power from the battery device 72 through a regulator based on a drive signal from the second drive circuit 62.

The following will describe a case where the at least one engine motor 80 connected to the second drive circuit 62 is a generator. The generator 80 is connected to the crankshaft 21. The target shaft 82 is the crankshaft 21. The generator 80 is a motor which is configured to apply a torque which is opposite in direction to the rotational direction of the crankshaft 21 to the crankshaft 21 when the engine 20 is in normal driving. The crankshaft 21 and the generator 80 are provided to be coaxial, for example. The generator 80 is connected to a battery device 72. The generator 80 is configured to generate electric power by applying torque opposite in direction to the rotational direction of the crankshaft 21 to the crankshaft 21. The electric power generated by the generator 80 is supplied to the battery device 72 through the second controller 60 and stored in the battery device 72.

The second drive circuit 62 is connected to the battery device 72 by a power line 72a. The second drive circuit 62 is connected to the generator 80 by a power line 80a. The second drive circuit 62 generates a drive signal required for causing the rotating electric machine 80 to apply a torque in the direction opposite to the rotational direction of the crankshaft 21 to the crankshaft 21, and sends the signal to the generator 80. Upon receiving this drive signal, the generator 80 rotates the crankshaft 21 in the direction opposite to its rotational direction, and sends the electric power generated by the generator 80 to the second drive circuit 62 through the power line 80a. The second drive circuit 62 supplies the power generated by the generator 80 to the battery device 72 through the power line 72a. As described above, the second drive circuit 62 controls the generator 80. The generator 80 may supply electric power to the battery device 72 through a regulator based on a drive signal from the second drive circuit 62.

The following will describe a case where the at least one engine motor 80 connected to the second drive circuit 62 is an electric motor and a generator. As shown in FIG. 1(d), the generator 80 is connected to a crankshaft 21. The target shaft 82 is the crankshaft 21. The generator 80 is a motor which is configured to apply, to the crankshaft 21, torque which is opposite in direction to the rotational direction of the crankshaft 21. The crankshaft 21 and the generator 80 are provided to be coaxial, for example. The generator 80 is, for example, a three-phase generator and is a permanent magnet generator. The generator 80 is connected to a battery device 72. The generator 80 is configured to generate electric power by applying torque opposite in direction to the rotational direction of the crankshaft 21 to the crankshaft 21. The generator 80 absorbs the torque from the crankshaft 21. The electric power generated by the generator 80 is supplied to the battery device 72 through the second controller 60 and stored in the battery device 72. The electric motor 80 is connected to a rotational shaft 3b of at least one rear wheel 3a of a rear wheel unit 3. The target shaft 82 is a rotational shaft 3b of the at least one rear wheel 3a of the rear wheel unit 3. The electric motor 80 is configured to apply a torque in a positive rotational direction of the crankshaft 21 to the rotational shaft 3b. The positive rotational direction of the crankshaft 21 is a direction in which at least the rotational shaft 3b of the rear wheel unit 3 rotates in a positive rotational direction. In other words, the electric motor 80 rotates at least the rotational shaft 3b of the rear wheel unit 3 in the positive rotational direction. The electric motor 80 rotates the rotational shaft 3b in the positive rotational direction as the electric power of the battery device 72 is supplied to the rotational shaft 3b through a second controller 60.

The second drive circuit 62 is connected to the battery device 72 by a power line 72a. The second drive circuit 62 is connected to the electric motor 80 and the generator 80 by a power line 80a. The second drive circuit 62 generates a drive signal by which the rotating electric machine 80 is driven. In other words, the second drive circuit 62 generates a drive signal required for causing the electric motor 80 to apply a torque in the same direction as the rotational direction of the crankshaft 21 to the rotational shaft 3b, and sends the signal to the electric motor 80. Upon receiving this drive signal, the electric motor 80 supplies the electric power stored in the battery device 72 to the second drive circuit 62 through the power line 72a. The second drive circuit 62 supplies the electric power supplied from the battery device 72 to the electric motor 80 through the power line 80a. Meanwhile, the second drive circuit 62 generates a drive signal required for causing the generator 80 to apply a torque in the direction opposite to the rotational direction of the crankshaft 21 to the crankshaft 21, and sends the signal to the generator 80. Upon receiving this drive signal, the generator 80 rotates the crankshaft 21 in the direction opposite to its rotational direction, and sends the electric power generated by the generator 80 to the second drive circuit 62 through the power line 80a. The second drive circuit 62 supplies the power generated by the generator 80 to the battery device 72 through the power line 72a. As described above, the second drive circuit 62 controls the electric motor 80 and the generator 80. The generator 80 may receive electric power from the battery device 72 through a regulator based on a drive signal from the second drive circuit 62. The electric motor 80 may supply electric power to the battery device 72 through a regulator based on a drive signal from the second drive circuit 62.

According to Sixth Embodiment of the present teaching, the at least one engine motor 80 is at least one of a rotating electric machine, an electric motor, or a generator. For example, the at least one engine motor 80 connected to the second drive circuit 62 is a rotating electric machine. The rotating electric machine 80 is configured to apply, to the crankshaft 21, torque which is identical in direction with or opposite in direction to the rotational direction of the crankshaft 21. A relatively large current flows through the power line 80a between the rotating electric machine 80 and the second drive circuit 62. In this connection, the at least one second controller 60 is provided so that the power line 80a between the second drive circuit 62 and the rotating electric machine 80 is shorter than the multiplex communication line 55 between the first communication device 51 and the second communication device 61. Furthermore, the at least one second controller 60 is provided so that the power line 80a between the second drive circuit 62 and the rotating electric machine 80 is shorter than the power line 72a between the second drive circuit 62 and the battery device 72. Furthermore, for example, the at least one engine motor 80 connected to the second drive circuit 62 is a starter motor. A relatively large current flows through the power line 80a between the electric motor 80 and the second drive circuit 62. In this connection, the at least one second controller 60 is provided so that the power line 80a between the second drive circuit 62 and the electric motor 80 is shorter than the multiplex communication line 55 between the first communication device 51 and the second communication device 61. Furthermore, the at least one second controller 60 is provided so that the power line 80a between the second drive circuit 62 and the electric motor 80 is shorter than the power line 72a between the second drive circuit 62 and the battery device 72. Furthermore, for example, the at least one engine motor 80 connected to the second drive circuit 62 is a generator. A relatively large current flows through the power line 80a between the generator 80 and the second drive circuit 62. In this connection, the at least one second controller 60 is provided so that the power line 80a between the second drive circuit 62 and the generator 80 is shorter than the multiplex communication line 55 between the first communication device 51 and the second communication device 61. Furthermore, the at least one second controller 60 is provided so that the power line 80a between the second drive circuit 62 and the generator 80 is shorter than the power line 72a between the second drive circuit 62 and the battery device 72. On this account, it is possible to suppress an influence of noise on the multiplex communication line 55 by suppressing the generation of noise, without providing the multiplex communication line 55 at a location remote from the rotating electric machine 80 and the battery device 72.

### (Seventh Embodiment)

The following will describe a straddled vehicle 1 of Seventh Embodiment of the present teaching with reference to FIG. 1(a) and 1(c). A straddled vehicle 1 of Seventh Embodiment has the following arrangements, in addition to those described in any of First Embodiment to Sixth Embodiment.

As shown in FIG. 1(a) and FIG. 1(c), an engine unit 40 includes a transmission 30 and a transmission control motor 71. The transmission 30 is therefore an electronically-controlled continuously variable transmission (ECVT) controlled by the transmission control motor 71 or an electronically-controlled stepped transmission controlled by the transmission control motor 71. The transmission control motor 71 is connected to a second drive circuit 62 by a power line 71a.

The engine unit 40 may not include at least one engine motor 80 as shown in FIG. 1(a), or may include at least one engine motor 80 as shown in FIG. 1(c).

According to Seventh Embodiment of the present teaching, a relatively large current flows through a power line 71a between the second drive circuit 62 and the transmission control motor 71 connected to the second drive circuit 62. The longer the power line 71a between the second drive circuit 62 and the transmission control motor 71 connected to the second drive circuit 62 is, the more likely noise is generated in a multiplex communication line. In other words, when the length Lm of the power line 71a between the second drive circuit 62 and the transmission control motor 71 connected to the second drive circuit 62 is longer than the length Lc of a multiplex communication line 55 between a first communication device 51 and a second communication device 61, noise tends to be generated in the multiplex communication line 55 connecting the first communication device 51 to the second communication device 61. Furthermore, when the length Lm of the power line 71a between the second drive circuit 62 and the transmission control motor 71 connected to the second drive circuit 62 is longer than the length Lb of a power line 72a between the second drive circuit 62 and a battery device 72, noise tends to be generated in the multiplex communication line 55 connecting the first communication device 51 to the second communication device 61. In this connection, the at least one second controller 60 is provided so that the length Lm of the power line 71a between the second drive circuit 62 and the transmission control motor 71 connected to the second drive circuit 62 is shorter than the length Lc of the multiplex communication line 55 connecting the first communication device 51 to the second communication device 61. Furthermore, the at least one second controller is provided so that the length Lm of the power line 71a between the second drive circuit 62 and the transmission control motor 71 connected to the second drive circuit 62 is shorter than the length Lb of the power line 72a between the second drive circuit 62 and the battery device 72. With these arrangements, the generation of noise is suppressed and an influence of noise on the multiplex communication line 55 connecting the first communication device 51 to the second communication device 61 is suppressed.

### (Eighth Embodiment)

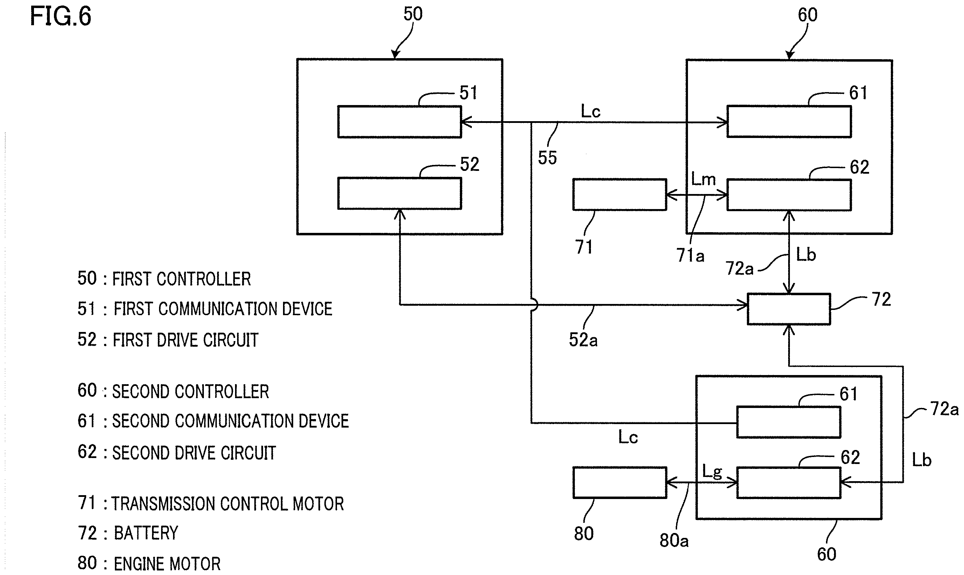

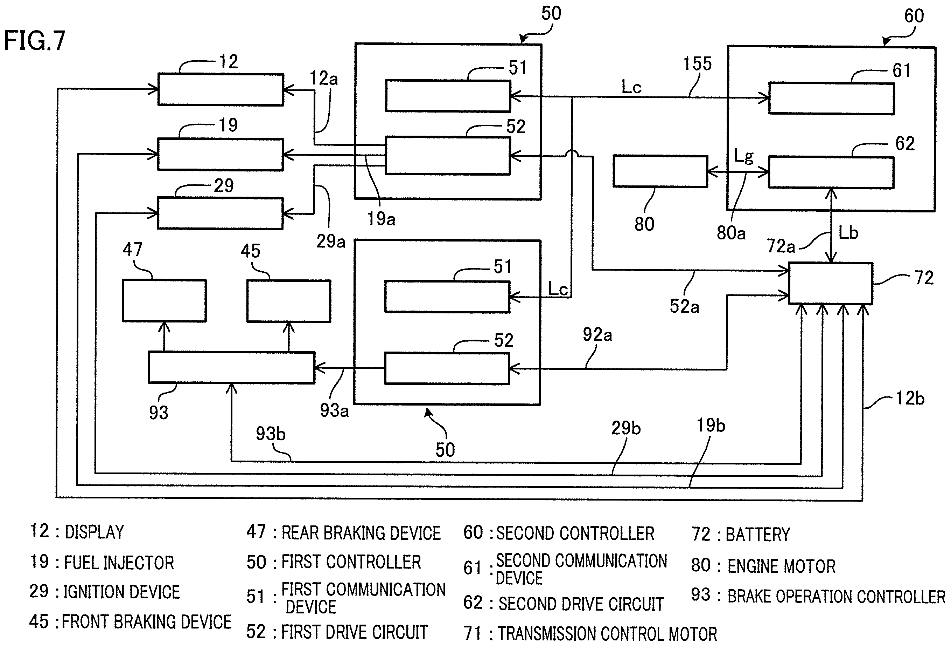

The following will describe a straddled vehicle 1 of Eighth Embodiment of the present teaching with reference to FIG. 6 and FIG. 7. A straddled vehicle 1 of Eighth Embodiment has the following arrangements, in addition to those described in any of First Embodiment to Seventh Embodiment.

As shown in FIG. 6, the straddled vehicle 1 of Eighth Embodiment includes one first controller 50 and two second controllers 60.

One first communication device 51 of the one first controller 50 and two second communication devices 61 of the two second controllers 60 are connected to one another by a multiplex communication line 55. The one first controller 50 and the two second controllers 60 are arranged to be capable of performing multiplexed data communication.

The second drive circuit 62 of one second controller 60 of the two second controllers 60 is connected to a transmission control motor 71. The other second controller 60 of the two second controllers 60 is connected to at least one engine motor 80.

The length of a multiplex communication line 55 between the first communication device 51 of the one first controller 50 and the second communication device 61 of one of the two second controllers 60 is termed as length Lc. The length of a power line 80a between the second drive circuit 62 and the at least one engine motor 80 connected to the second drive circuit 62 is termed as length Lg. The length of a power line 71a between the second drive circuit 62 and the transmission control motor 71 connected to the second drive circuit 62 is termed as length Lm. The length of a power line 72a between the second drive circuit 62 of one of the two second controllers 60 and the battery device 72 is termed as length Lb. The length Lc is longer than the length Lg and the length Lm. The length Lg and the length Lm are shorter than the length Lb. The length Lc is longer than the length Lb.

As shown in FIG. 7, the straddled vehicle 1 of Eighth Embodiment includes two first controllers 50 and one second controller 60.

Two first communication devices 51 of the two first controllers 50 and one second communication device 61 of the one second controller 60 are connected to one another by a multiplex communication line 55. The two first controllers 50 and the one second controller 60 are arranged to be capable of performing multiplexed data communication. The first drive circuit 52 of the first controller 50 that is one of the two first controllers 50 is connected to a display 12, a fuel injector 19, and an ignition device 29 by communication lines 12a, 19a, and 29a. The battery device 72 is connected to the display 12, the fuel injector 19, and the ignition device 29 connected to the first drive circuit 52 of the first controller 50 that is one of the two first controllers 50 by power lines 12b, 19b, and 29b, and supplies electric power thereto. The first drive circuit 52 of the first controller 50 that is the other one of the two first controllers 50 is, for example, connected to a brake operation controller 93 by a communication line 93a. The battery device 72 is connected to the brake operation controller 93 connected to the first drive circuit 52 of the first controller 50 that is the other one of the two first controllers 50 by a power line 93b, and supplies electric power to the brake operation controller 93.

The brake operation controller 93 is configured to control a front braking device 45 and a rear braking device 47 (see FIG. 4). The brake operation controller 93 is configured to be able to control at least one of front wheel braking force applied to a front wheel unit 2 by the front braking device 45 or rear wheel braking force applied to a rear wheel unit 3 by the rear braking device 47. The brake operation controller 93 activates the front braking device 45 and the rear braking device 47 as the rider operates a front brake operator 46 and a rear brake operator 48 (see FIG. 4). Even if the front brake operator 46 and the rear brake operator 48 are not operated, the brake operation controller 93 is able to activate the front braking device 45 and the rear braking device 47 based on a drive signal generated by the first drive circuit 52 of the first controller 50.

The length of a multiplex communication line 55 between the first communication device 51 of one of the first controllers 50 and the second communication device 61 of the one second controller 60 is termed as length Lc. The length of a power line 80a between the second drive circuit 62 of the one second controller 60 and at least one engine motor 80 connected to the second drive circuit 62 is termed as length Lg. The length of a power line 71a between the second drive circuit 62 of the one second controller 60 and the transmission control motor 71 connected to the second drive circuit 62 is termed as length Lm. The length of a power line 72a between the second drive circuit 62 of the one second controller 60 and the battery device 72 is termed as length Lb. The length Lc is longer than the length Lg and the length Lm. The length Lg and the length Lm are shorter than the length Lb. The length Lc is longer than the length Lb.

According to Eighth Embodiment of the present teaching, at least one of the transmission control motor 71 or the at least one engine motor 80 is connected to the second drive circuit 62 of the second controller 60. A relatively large current flows in the power line 71a between the second drive circuit 62 and the transmission control motor 71 or the power line 80a between the second drive circuit 62 and the at least one engine motor 80. The longer the power line 71a or 80a is, the more likely noise is generated in the multiplex communication line 55. As described above, the at least one second controller 60 is provided at a location where the length Lm of the power line 71a between the second drive circuit 62 and the transmission control motor 71 and the length Lg of the power line 80a between the second drive circuit 62 and the at least one engine motor 80 are shorter than the length Lc of the multiplex communication line 55 between the first communication device 51 and the second communication device 61. Furthermore, the at least one second controller 60 is provided at a location where the length Lg of the power line 80a between the second drive circuit 62 and the rotating electric machine 80 connected to the second drive circuit 62 is shorter than the length Lb of the power line 72a between the second drive circuit 62 and the battery device 72. On this account, even if more than one second controllers are provided, an influence of noise on the multiplex communication line 55 connecting the first communication device 51 to the second communication device 61 is suppressed by suppressing the generation of the noise itself. Furthermore, the length of the multiplex communication line 55 between the at least one first controller 50 and the at least one second controller 60 can be set at will. On this account, even if there are more than one first controllers 50, the degree of freedom in the layout of the first controllers 50 is improved. As a result, even if plural controllers connected by the multiplex communication line 55 are mounted on the straddled vehicle 1, upsizing of the straddled vehicle 1 is suppressed.

### [Reference Signs List]

1: straddled vehicle 1, 2: front wheel unit, 3: rear wheel unit, 7: vehicle body frame, 12: display, 12b, 19b, 29b: forth power line, 19: fuel injector, 20: engine, 21: crankshaft, 29: ignition device, 30: transmission, 31: primary sheave, 32: secondary sheave, 33: belt, 40: engine unit, 41: engine unit case, 50: first controller, 51: first communication device, 52a: first power line, 55: multiplex communication line, 60: second controller, 61: second communication device, 62: second drive circuit, 71: transmission control motor, 71a, 80a: third power line, 72: battery, 72a: second power line, 80: engine motor, 82: target shaft

## Claims

1. A straddled vehicle (1) comprising:
a front wheel unit (2) which includes at least one front wheel;
a rear wheel unit (3) which includes at least one rear wheel and is provided rearward of the front wheel unit (2) in a vehicle front-rear direction;
a vehicle body frame (7);
an engine unit (40) which includes an engine (20) including a crankshaft (21) and is supported by the vehicle body frame (7);
a battery device (72) which is supported by the vehicle body frame (7);
at least one first controller (50) which includes a first communication device (51) and a first drive circuit (52), the first communication device (51) being connected to a multiplex communication line (55) performing multiplexed data communication so as to be capable of performing the multiplexed data communication; and
at least one second controller (60) which includes a second communication device (61) and a second drive circuit (62), the second communication device (61) being connected to the multiplex communication line (55) so as to be capable of performing the multiplexed data communication and capable of performing the multiplexed data communication with the first communication device (51) of the at least one first controller (50),
wherein the first drive circuit (52) is connected to the battery device (72) by a first power line (52a) for receiving electric power from the battery device (72),
wherein the second drive circuit (62) is connected to the battery device (72) by a second power line (72a) for receiving electric power from the battery device (72),
wherein the engine unit (40) includes at least one of (a) at least one engine motor (80) which is configured to apply a torque to a target shaft (82) provided on a power transmission path through which power is transmitted from the crankshaft (21) to a driving wheel of at least one of the front wheel unit (2) or the rear wheel unit (3), or (b) a transmission (30) provided in at least part of the power transmission path and a transmission control motor (71) configured to change the transmission ratio of the transmission (30),
wherein in the at least one second controller (60), the second drive circuit (62) is connected by a third power line (71a, 80a) to at least one of the transmission control motor (71) or the at least one engine motor (80), the second drive circuit (62) configured to generate a drive signal by which the transmission control motor (71) or the at least one engine motor (80) is driven,
**characterized in that**
the at least one second controller (60) is provided at a location where a length (Lm) of the third power line (71a) between the second drive circuit (62) and the transmission control motor (71) connected to the second drive circuit (62) or a length (Lg) of the third power line (80a) between the second drive circuit (62) and the at least one engine motor (80) connected to the second drive circuit (62) is shorter than a length (Lb) of the second power line (72a) between the second drive circuit (62) and the battery device (72), and
wherein a length (Lc) of the multiplex communication line (55) between the first communication device (51) and the second communication device (61) is longer than the length (Lm) of the third power line (71a) between the second drive circuit (62) and the transmission control motor (71) connected to the second drive circuit (62) or the length (Lg) of the third power line (80a) between the second drive circuit (62) and the at least one engine motor (80) connected to the second drive circuit (62).

2. The straddled vehicle (1) according to claim 1, wherein the at least one second controller (60) is provided at a location where the multiplex communication line (55) between the first communication device (51) and the second communication device (61) is longer than the second power line (72a) between the second drive circuit (62) and the battery device (72).

3. The straddled vehicle (1) according to claim 1 or 2, wherein,
the engine unit (40) includes the transmission (30),
the transmission (30) includes: a primary sheave (31) which is provided on a primary shaft member (21c) to which power of the crankshaft (21) is transmitted; a secondary sheave (32) which is provided on a secondary shaft member (34) having a rotational axis extending in parallel to a rotational axis of the primary shaft member (21c); and a belt (33) which is wound on the primary sheave (31) and the secondary sheave (32) to transmit, to the secondary sheave (32), power transmitted from the crankshaft (21) to the primary sheave (31), and
each of the at least one second controller (60) is provided so as not to at least partially overlap the primary shaft member (21c) and the secondary shaft member (34) when viewed in the direction of the rotational axis of the primary shaft member (21c).

4. The straddled vehicle (1) according to any one of claims 1 to 3, further comprising
an engine unit case (41) which accommodates at least part of at least one of the engine (20) or the transmission (30),
the at least one second controller (60) being supported by the engine unit case (41).

5. The straddled vehicle (1) according to any one of claims 1 to 4, wherein,
the first drive circuit (52) is connected, by a communication line (12a, 19a, 29a), to at least one of a display (12) which is configured to display a running state of the straddled vehicle (1), a fuel injector (19) which is configured to inject and supply fuel to the engine (20), or an ignition device (29) which is configured to ignite the fuel supplied to the engine (20),
the first drive circuit (52) is configured to generate a drive signal by which at least one of the display (12), the fuel injector (19), or the ignition device (29) is driven, and
the battery device (72) is connected by a fourth power line (12b, 19b, 29b) to at least one of the display (12), the fuel injector (19), or the ignition device (29) connected to the first drive circuit (52), so as to supply electric power to the at least one of the display (12), the fuel injector (19), or the ignition device (29).

6. The straddled vehicle (1) according to any one of claims 1 to 5, wherein, the at least one engine motor (80) connected to the second drive circuit (62) is at least one of: a rotating electric machine which is configured to apply, to the target shaft (82), a torque in a direction identical with or opposite to a rotational direction of the crankshaft (21); an electric motor which is configured to apply, to the target shaft (82), a torque in the direction identical with the rotational direction of the crankshaft (21); or a generator which is configured to apply, to the target shaft (82), a torque in the direction opposite to the rotational direction of the crankshaft (21).

7. The straddled vehicle (1) according to any one of claims 1 to 6, wherein,
the engine unit (40) includes the transmission (30) and the transmission control motor (71), and
the transmission control motor (71) is connected to the second drive circuit (62) by the third power line (71a, 80a).

8. The straddled vehicle (1) according to any one of claims 1 to 7, wherein,
the at least one first controller (50) includes a plurality of the first controllers,
the at least one second controller (60) includes a plurality of the second controllers, or
the at least one first controller (50) includes a plurality of the first controllers and the at least one second controller (60) includes a plurality of the second controllers.

## Patentansprüche

1. Ein Spreizsitzfahrzeug (1), das folgende Merkmale aufweist:
eine Vorderradeinheit (2), die zumindest ein Vorderrad aufweist;
eine Hinterradeinheit (3), die zumindest ein Hinterrad aufweist und die in einer Vorne-Hinten-Richtung des Fahrzeugs hinter der Vorderradeinheit (2) vorgesehen ist;
einen Fahrzeugkörperrahmen (7);
eine Motoreinheit (40), die einen Motor (20) mit einer Kurbelwelle (21) aufweist und durch den Fahrzeugkörperrahmen (7) getragen wird;
eine Batterievorrichtung (72), die durch den Fahrzeugkörperrahmen (7) getragen wird;
zumindest eine erste Steuerung (50), die eine erste Kommunikationsvorrichtung (51) und eine erste Treiberschaltung (52) aufweist, wobei die erste Kommunikationsvorrichtung (51) mit einer Multiplex-Kommunikationsleitung (55) verbunden ist, die eine Multiplex-Datenkommunikation durchführt, um so in der Lage zu sein, die Multiplex-Datenkommunikation durchzuführen; und
zumindest eine zweite Steuerung (60), die eine zweite Kommunikationsvorrichtung (61) und eine zweite Treiberschaltung (62) aufweist, wobei die zweite Kommunikationsvorrichtung (61) mit der Multiplex-Kommunikationsleitung (55) verbunden ist, um so in der Lage zu sein, die Multiplex-Datenkommunikation durchzuführen, und in der Lage zu sein, die Multiplex-Datenkommunikation mit der ersten Kommunikationsvorrichtung (51) der zumindest einen ersten Steuerung (50) durchzuführen,
wobei die erste Treiberschaltung (52) mit der Batterievorrichtung (72) durch eine erste Leistungsleitung (52a) zum Aufnehmen elektrischer Leistung von der Batterievorrichtung (72) verbunden ist,
wobei die zweite Treiberschaltung (62) mit der Batterievorrichtung (72) durch eine zweite Leistungsleitung (72a) zum Aufnehmen elektrischer Leistung von der Batterievorrichtung (72) verbunden ist,
wobei die Motoreinheit (40) (a) zumindest eine Kraftmaschine (80), die dazu ausgebildet ist, ein Drehmoment auf eine Zielwelle (82) auszuüben, die an einem Leistungsübertragungsweg vorgesehen ist, durch den Leistung von der Kurbelwelle (21) an ein Antriebsrad der Vorderradeinheit (2) und/oder der Hinterradeinheit (3) übertragen wird, und/oder (b) ein Getriebe (30) aufweist, das in zumindest einem Teil des Leistungsübertragungswegs vorgesehen ist, sowie einen Getriebesteuermotor (71), der dazu ausgebildet ist, das Übersetzungsverhältnis des Getriebes (30) zu ändern,
wobei bei der zumindest einen zweiten Steuerung (60) die zweite Treiberschaltung (62) durch eine dritte Leistungsleitung (71a, 80a) mit dem Getriebesteuermotor (71) und/oder der zumindest einen Kraftmaschine (80) verbunden ist, wobei die zweite Treiberschaltung (62) dazu ausgebildet ist, ein Treibersignal zu erzeugen, durch das der Getriebesteuermotor (71) oder die zumindest eine Kraftmaschine (80) getrieben wird,
**dadurch gekennzeichnet, dass**
die zumindest eine zweite Steuerung (60) an einem Ort vorgesehen ist, an dem eine Länge (Lm) der dritten Leistungsleitung (71a) zwischen der zweiten Treiberschaltung (62) und dem Getriebesteuermotor (71), der mit der zweiten Treiberschaltung (62) verbunden ist, oder eine Länge (Lg) der dritten Leistungsleitung (80a) zwischen der zweiten Treiberschaltung (62) und der zumindest einen Kraftmaschine (80), die mit der zweiten Treiberschaltung (62) verbunden ist, kürzer ist als eine Länge (Lb) der zweiten Leistungsleitung (72a) zwischen der zweiten Treiberschaltung (62) und der Batterievorrichtung (72), und
wobei eine Länge (Lc) der Multiplex-Kommunikationsleitung (55) zwischen der ersten Kommunikationsvorrichtung (51) und der zweiten Kommunikationsvorrichtung (61) länger ist als die Länge (Lm) der dritten Leistungsleitung (71a) zwischen der zweiten Treiberschaltung (62) und dem Getriebesteuermotor (71), der mit der zweiten Treiberschaltung (62) verbunden ist, oder die Länge (Lg) der dritten Leistungsleitung (80a) zwischen der zweiten Treiberschaltung (62) und der zumindest einen Kraftmaschine (80), die mit der zweiten Treiberschaltung (62) verbunden ist.

2. Das Spreizsitzfahrzeug (1) gemäß Anspruch 1, bei dem die zumindest eine zweite Steuerung (60) an einem Ort vorgesehen ist, an dem die Multiplex-Kommunikationsleitung (55) zwischen der ersten Kommunikationsvorrichtung (51) und der zweiten Kommunikationsvorrichtung (61) länger ist als die zweite Leistungsleitung (72a) zwischen der zweiten Treiberschaltung (62) und der Batterievorrichtung (72).

3. Das Spreizsitzfahrzeug (1) gemäß Anspruch 1 oder 2, bei dem
die Motoreinheit (40) das Getriebe (30) umfasst,
das Getriebe (30) Folgendes aufweist: eine primäre Antriebsscheibe (31), die an einem primären Wellenbauteil (21c) vorgesehen ist, an das Leistung der Kurbelwelle (21) übertragen wird; eine sekundäre Antriebsscheibe (32), die an einem sekundären Wellenbauteil (34) mit einer Rotationsachse vorgesehen ist, die sich parallel zu einer Rotationsachse des primären Wellenbauteils (21c) erstreckt; und einen Riemen (33), der auf die primäre Antriebsscheibe (31) und die sekundäre Antriebsscheibe (32) gewickelt ist, um Leistung, die von der Kurbelwelle (21) an die primäre Antriebsscheibe (31) übertragen wird, an die sekundäre Antriebsscheibe (32) zu übertragen, und
wobei jede der zumindest einen zweiten Steuerung (60) so vorgesehen ist, dass sie das primäre Wellenbauteil (21c) und das sekundäre Wellenbauteil (34) bei Betrachtung in der Richtung der Rotationsachse des primären Wellenbauteils (21c) nicht zumindest teilweise überlappt.

4. Das Spreizsitzfahrzeug (1) gemäß einem der Ansprüche 1 bis 3, das ferner folgendes Merkmal aufweist:
ein Motoreinheitsgehäuse (41), das zumindest einen Teil des Motors (20) und/oder des Getriebes (30) unterbringt,
wobei die zumindest eine zweite Steuerung (60) durch das Motoreinheitsgehäuse (41) getragen wird.

5. Das Spreizsitzfahrzeug (1) gemäß einem der Ansprüche 1 bis 4, bei dem
die erste Treiberschaltung (52) durch eine Kommunikationsleitung (12a, 19a, 29a) mit einer Anzeige (12), die dazu ausgebildet ist, einen Laufzustand des Spreizsitzfahrzeugs (1) anzuzeigen, einem Kraftstoffeinspritzer (19), der dazu ausgebildet ist, Kraftstoff in den Motor (20) einzuspritzen und diesem zuzuführen, und/oder einer Zündungsvorrichtung (29) verbunden ist, die dazu ausgebildet ist, den Kraftstoff, der dem Motor (20) zugeführt wird, zu zünden,
wobei die erste Treiberschaltung (52) dazu ausgebildet ist, ein Treibersignal zu erzeugen, durch das die Anzeige (12), der Kraftstoffeinspritzer (19) und/oder die Zündungsvorrichtung (29) getrieben wird, und
wobei die Batterievorrichtung (72) durch eine vierte Leistungsleitung (12b, 19b, 29b) mit der Anzeige (12), dem Kraftstoffeinspritzer (19) und/oder der Zündungsvorrichtung (29) verbunden ist, die mit der ersten Treiberschaltung (52) verbunden ist, um so elektrische Leistung zu der Anzeige (12), dem Kraftstoffeinspritzer (19) und/oder der Zündungsvorrichtung (29) zuzuführen.

6. Das Spreizsitzfahrzeug (1) gemäß einem der Ansprüche 1 bis 5, bei dem die zumindest eine Kraftmaschine (80), die mit der zweiten Treiberschaltung (62) verbunden ist, zumindest eines von Folgenden ist: eine elektrische Drehmaschine, die dazu ausgebildet ist, auf die Zielwelle (82) ein Drehmoment in einer Richtung auszuüben, die identisch oder entgegengesetzt zu einer Rotationsrichtung der Kurbelwelle (21) ist; ein Elektromotor, der dazu ausgebildet ist, auf die Zielwelle (82) ein Drehmoment in der Richtung auszuüben, die identisch zu der Rotationsrichtung der Kurbelwelle (21) ist; oder ein Generator, der dazu ausgebildet ist, auf die Zielwelle (82) ein Drehmoment in der Richtung entgegengesetzt zu der Rotationsrichtung der Kurbelwelle (21) auszuüben.

7. Das Spreizsitzfahrzeug (1) gemäß einem der Ansprüche 1 bis 6, bei dem
die Motoreinheit (40) das Getriebe (30) und den Getriebesteuermotor (71) aufweist und
der Getriebesteuermotor (71) durch die dritte Leistungsleitung (71a, 80a) mit der zweiten Treiberschaltung (62) verbunden ist.

8. Das Spreizsitzfahrzeug (1) gemäß einem der Ansprüche 1 bis 7, bei dem
die zumindest eine erste Steuerung (50) eine Mehrzahl der ersten Steuerungen aufweist,
die zumindest eine zweite Steuerung (60) eine Mehrzahl der zweiten Steuerungen aufweist oder
die zumindest eine erste Steuerung (50) eine Mehrzahl der ersten Steuerungen aufweist und die zumindest eine zweite Steuerung (60) eine Mehrzahl der zweiten Steuerungen aufweist.

## Revendications

1. Véhicule à selle (1) comprenant:
une unité de roues avant (2) qui comporte au moins une roue avant;
une unité de roues arrière (3) qui comporte au moins une roue arrière et qui est prévue à l'arrière de l'unité de roues avant (2) dans une direction avant-arrière du véhicule;
un châssis de carrosserie de véhicule (7);
une unité de moteur (40) qui comporte un moteur (20) comportant un vilebrequin (21) et qui est supportée par le châssis de carrosserie de véhicule (7);
un dispositif de batterie (72) qui est supporté par le châssis de carrosserie de véhicule (7);
au moins un premier moyen de commande (50) qui comporte un premier dispositif de communication (51) et un premier circuit de pilotage (52), le premier dispositif de communication (51) étant connecté à une ligne de communication multiplex (55) effectuant une communication de données multiplex de manière à être à même d'effectuer la communication de données multiplex; et
au moins un deuxième moyen de commande (60) qui comporte un deuxième dispositif de communication (61) et un deuxième circuit de pilotage (62), le deuxième dispositif de communication (61) étant connecté à la ligne de communication multiplex (55) de manière à être à même d'effectuer la communication de données multiplex et à être à même d'effectuer la communication de données multiplex avec le premier dispositif de communication (51) de l'au moins un premier moyen de commande (50),
dans lequel le premier circuit de pilotage (52) est connecté au dispositif de batterie (72) par une première ligne d'énergie (52a) pour recevoir de l'énergie électrique du dispositif de batterie (72),
dans lequel le deuxième circuit de pilotage (62) est connecté au dispositif de batterie (72) par une deuxième ligne d'énergie (72a) pour recevoir de l'énergie électrique du dispositif de batterie (72),
dans lequel l'unité de moteur (40) comporte au moins l'un parmi (a) au moins un moteur (80) qui est configuré pour appliquer un couple à un arbre cible (82) prévu sur un trajet de transmission d'énergie à travers lequel l'énergie est transmise du vilebrequin (21) à une roue d'entraînement d'au moins l'une parmi l'unité de roues avant (2) ou l'unité de roues arrière (3), ou (b) une transmission (30) prévue dans au moins une partie du trajet de transmission d'énergie et un moteur de commande de transmission (71) configuré pour modifier le rapport de transmission de la transmission (30),
dans lequel, dans l'au moins un deuxième moyen de commande (60), le deuxième circuit de pilotage (62) est connecté par une troisième ligne d'énergie (71a, 80a) à au moins l'un parmi le moteur de commande de transmission (71) ou l'au moins un moteur (80), le deuxième circuit d'entraînement (62) étant configuré pour générer un signal d'entraînement par lequel est entraîné le moteur de commande de transmission (71) ou l'au moins un moteur (80),
**caractérisé par le fait que** l'au moins un deuxième moyen de commande (60) est prévu à un emplacement où une longueur (Lm) de la troisième ligne d'énergie (71a) entre le deuxième circuit d'entraînement (62) et le moteur de commande de transmission (71) connecté au deuxième circuit de pilotage (62) ou une longueur (Lg) de la troisième ligne d'énergie (80a) entre le deuxième circuit de pilotage (62) et l'au moins un moteur (80) connecté au deuxième circuit de pilotage (62) est plus courte qu'une longueur (Lb) de la deuxième ligne d'énergie (72a) entre le deuxième circuit de pilotage (62) et le dispositif de batterie (72), et
dans lequel une longueur (Lc) de la ligne de communication multiplex (55) entre le premier dispositif de communication (51) et le deuxième dispositif de communication (61) est plus longue que la longueur (Lm) de la troisième ligne d'énergie (71a) entre le deuxième circuit de pilotage (62) et le moteur de commande de transmission (71) connecté au deuxième circuit de pilotage (62) ou que la longueur (Lg) de la troisième ligne d'énergie (80a) entre le deuxième circuit de pilotage (62) et l'au moins un moteur (80) connecté au deuxième circuit de pilotage (62).

2. Véhicule à selle (1) selon la revendication 1, dans lequel l'au moins un deuxième moyen de commande (60) est prévu à un emplacement où la ligne de communication multiplex (55) entre le premier dispositif de communication (51) et le deuxième dispositif de communication (61) est plus longue que la deuxième ligne d'énergie (72a) entre le deuxième circuit de pilotage (62) et le dispositif de batterie (72).

3. Véhicule à selle (1) selon la revendication 1 ou 2, dans lequel
le groupe de moteur (40) comporte la transmission (30),
la transmission (30) comporte: une poulie primaire (31) qui est prévue sur un élément d'arbre primaire (21c) auquel est transmise l'énergie du vilebrequin (21); une poulie secondaire (32) qui est prévue sur un élément d'arbre secondaire (34) présentant un axe de rotation s'étendant de manière parallèle à un axe de rotation de l'élément d'arbre primaire (21c); et une courroie (33) qui est enroulée sur la poulie primaire (31) et la poulie secondaire (32) pour transmettre, à la poulie secondaire (32), l'énergie transmise du vilebrequin (21) à la poulie primaire (31), et
chacun des au moins un deuxième moyen de commande (60) est prévu de manière à ne pas venir au moins partiellement en chevauchement avec l'élément d'arbre primaire (21c) et l'élément d'arbre secondaire (34), lorsque vu dans la direction de l'axe de rotation de l'élément d'arbre primaire (21c).

4. Véhicule à selle (1) selon l'une quelconque des revendications 1 à 3, comprenant par ailleurs
un carter d'unité de moteur (41) qui abrite au moins une partie d'au moins l'un parmi le moteur (20) ou la transmission (30),
l'au moins un deuxième moyen de commande (60) étant supporté par le carter d'unité de moteur (41).

5. Véhicule à selle (1) selon l'une quelconque des revendications 1 à 4, dans lequel
le premier circuit de pilotage (52) est connecté, par une ligne de communication (12a, 19a, 29a), à au moins l'un parmi un écran d'affichage (12) qui est configuré pour afficher un état de circulation du véhicule à selle (1), un injecteur de carburant (19) qui est configuré pour injecter et alimenter du carburant vers le moteur (20), ou un dispositif d'allumage (29) qui est configuré pour allumer le carburant alimenté vers le moteur (20),
le premier circuit de pilotage (52) est configuré pour générer un signal d'entraînement par lequel est entraîné au moins l'un parmi l'écran d'affichage (12), l'injecteur de carburant (19) ou le dispositif d'allumage (29), et
le dispositif de batterie (72) est connecté par une quatrième ligne d'énergie (12b, 19b, 29b) à au moins l'un parmi l'écran d'affichage (12), l'injecteur de carburant (19) ou le dispositif d'allumage (29) connecté au premier circuit de pilotage (52), de manière à alimenter de l'énergie électrique vers au moins l'un parmi l'écran d'affichage (12), l'injecteur de carburant (19) ou le dispositif d'allumage (29).

6. Véhicule à selle (1) selon l'une quelconque des revendications 1 à 5, dans lequel l'au moins un moteur (80) connecté au deuxième circuit de pilotage (62) est au moins l'un parmi: une machine électrique rotative qui est configurée pour appliquer, à l'arbre cible (82), un couple dans une direction identique ou opposée à une direction de rotation du vilebrequin (21); un moteur électrique qui est configuré pour appliquer, à l'arbre cible (82), un couple dans la direction identique à la direction de rotation du vilebrequin (21); ou un générateur qui est configuré pour appliquer, à l'arbre cible (82), un couple dans la direction opposée à la direction de rotation du vilebrequin (21).

7. Véhicule à selle (1) selon l'une quelconque des revendications 1 à 6, dans lequel
l'unité de moteur (40) comporte la transmission (30) et le moteur de commande de transmission (71), et
le moteur de commande de transmission (71) est connecté au deuxième circuit de pilotage (62) par la troisième ligne d'énergie (71a, 80a).

8. Véhicule à selle (1) selon l'une quelconque des revendications 1 à 7, dans lequel
l'au moins un premier moyen de commande (50) comporte une pluralité des premiers moyens de commande,
l'au moins un deuxième moyen de commande (60) comporte une pluralité des deuxièmes moyens de commande, ou
l'au moins un premier moyen de commande (50) comporte une pluralité des premiers moyens de commande et l'au moins un deuxième moyen de commande (60) comporte une pluralité des deuxièmes moyens de commande.
